# EUROPÄISCHE PATENTSCHRIFT

(11) **EP 2 981 364 B1**
(45) Veröffentlichungstag und Bekanntmachung des Hinweises auf die Patenterteilung: **30.05.2018**
(21) Anmeldenummer: 14711242.9
(22) Anmeldetag: 18.03.2014
(51) Int. Cl.: B05B 7/14, B65G 53/28, F04F 1/02

(54) **PULVERFÖRDERVORRICHTUNG UND ZUGEHÖRIGES BETRIEBSVERFAHREN**
POWDER CONVEYING DEVICE AND PROCESS FOR OPERATING
DISPOSITIF DE TRANSPORT DE POUDRE ET SON PROCEDE DE FONCTIONNEMENT

(30) Priorität: 03.04.2013 DE 102013205895; 19.06.2013 DE 102013211536
(43) Veröffentlichungstag der Anmeldung: 10.02.2016
(73) Patentinhaber: Gema Switzerland GmbH, 9015 St. Gallen (CH)
(72) Erfinder: MAUCHLE, Felix, CH-9030 Abtwil (CH); VIELI, Hanspeter, CH-9403 Goldach (CH)
(74) Vertreter: Trinks, Ole
(86) Internationale Anmeldenummer: PCT/EP2014/055442
(87) Internationale Veröffentlichungsnummer: WO 2014/161717

(56) Entgegenhaltungen:
- DE-A1-102004 052 949
- DE-A1-102007 005 313
- DE-A1-102007 049 219
- DE-B3-102005 006 522
- US-A1- 2005 229 845

## Beschreibung

Die vorliegende Erfindung betrifft eine Pulverfördervorrichtung, insbesondere für Beschichtungspulver, sowie ein Verfahren zum Betreiben einer solchen Pulverförder vorrichtung.

Pulverfördervorrichtungen dienen zum Fördern von Pulver, insbesondere Beschichtungspulver, beispielsweise von einem ersten Pulverreservoir zu einem stromabwärts der Pulverfördervorrichtung angeordneten zweiten Pulverreservoir oder einer stromabwärts der Pulverfördervorrichtung angeordneten Pulversprühbeschichtungspistole oder der gleichen Einrichtung zum Versprühen von Beschichtungspulver. Zu diesem Zweck weist eine Pulverfördervorrichtung in der Regel mindestens eine Pumpe, insbesondere Pulverdichtstrompumpe, auf, wobei die Pumpe üblicherweise mindestens eine Förderkammer mit einem Pulvereinlassventil und einem Pulverauslassventil aufweist. Siehe hierzu als nächsten Stand der Technik DE102004052949. Beispielsweise betrifft die deutsche Patentanmeldung Nr. 10 2013 205 895.0 eine Pulverfördervorrichtung mit einer Pulverdichtstrompumpe (engl.: dense phase powder pump), wobei diese Pulverdichtstrompumpe mit Hilfe einer Steuereinrichtung derart ansteuerbar ist, dass in einem Pulverförder-Betriebsmodus der Pulverdichtstrompumpe Beschichtungspulver von einem ersten Pulverreservoir zu einem stromabwärts von dem ersten Pulverreservoir angeordneten zweiten Pulverreservoir bzw. zu einer stromabwärts angeordneten Pulversprühbeschichtungspistole gefördert wird.

In dem Pulverförder-Betriebsmodus der Pulverdichtstrompumpe wird abwechselnd durch das geöffnete Pulvereinlassventil eine Pulverportion in die Förderkammer eingesaugt, während das Pulverauslassventil geschlossen ist, und durch das geöffnete Pulverauslassventil die zuvor in die Förderkammer eingesaugte Pulverportion durch Einleiten von Transport-Druckgas in die Förderkammer abgegeben, während das Pulvereinlassventil geschlossen ist.

In einem Spül-Betriebsmodus der Pulverdichtstrompumpe hingegen ist entweder das Pulvereinlassventil oder das Pulverauslassventil geöffnet, während das andere der beiden Ventile geschlossen ist, und wobei gleichzeitig oder zeitig verzögert Spül-Druckgas in die Förderkammer eingeleitet wird.

Andererseits betrifft beispielsweise die Druckschrift EP 1 551 558 A1 eine Pulverfördervorrichtung mit einer Pulverdichtstrompumpe, welche eine erste Förderkammer und eine parallel zu der ersten Förderkammer angeordnete zweite Pulverförderkammer aufweist. Die beiden Förderkammern der aus diesem Stand der Technik bekannten Pulverdichtstrompumpe sind sowohl ansaugseitig als auch förderseitig jeweils durch eine (mechanisch betätigte) Quetschventilanordnung begrenzt.

Die Druckschrift DE 10 2004 052949 A1 betrifft ein Verfahren und eine Vorrichtung zur Überwachung von Strömungsverhältnissen in einem Leitungsstrang, der aus einer Förderpumpe mit einem Gemisch aus pulverförmigem Material und Förderdruckluft beaufschlagt wird, indem mindestens zwei Kammern der Förderpumpe im Wechsel mit pulverförmigem Material befüllt und durch Zufuhr von Förderdruckluft aus einer Druckluftquelle in eine zuvor befüllte Kammer in den Leitungsstrang entleert werden. Um Schwankungen der Strömungsverhältnisse und insbesondere Verstopfungen innerhalb des Leitungsstrangs zu detektieren und auf diese Weise eine kontinuierliche Prozessüberwachung zu ermöglichen, wird vorgeschlagen, dass die Durchflussmenge der Förderdruckluft in einer von der Druckluftquelle zu den beiden Kammern führenden gemeinsamen Druckluftzufuhrleitung gemessen und ausgewertet wird.

Mit der vorliegenden Erfindung soll die Aufgabe gelöst werden, eine Pulverfördervorrichtung der eingangs genannten Art dahingehend weiterzubilden, dass in einer leicht zu realisierenden aber dennoch effektiven Weise eine potenzielle Fehlfunktion der Pulverdichtstrompumpe automatisch erkannt werden kann. Des Wei teren soll ein entsprechendes Verfahren zum Betreiben einer solchen Pulverfördervorrichtung angegeben werden.

Diese Aufgabe wird im Hinblick auf die Pulverfördervorrichtung durch den Gegenstand des unabhängigen Patentanspruches 1 und im Hinblick auf das Verfahren durch den Gegenstand des unabhängigen Patentanspruches 14 gelöst. Vorteilhafte Weiterbildungen der Pulverfördervorrichtung sind in den abhängigen Ansprüchen 2 bis 13 angegeben.

Demnach wird erfindungsgemäß insbesondere eine Pulverfördervorrichtung angegeben, welche mindestens eine Pulverdichtstrompumpe aufweist. Die mindestens eine Pulverdichtstrompumpe weist mindestens eine Förderkammer mit einem Pulvereinlassventil und einem Pulverauslassventil auf, wobei das Pulvereinlassventil und das Pulverauslassventil jeweils als ein pneumatisch betätigbares und bei Anlegen eines Betätigungsdruckes verschließbares Quetschventil ausgeführt sind.

Eine Steuereinrichtung der Pulverfördervorrichtung dient zum Ansteuern der entsprechend ansteuerbaren Komponenten der Pulverfördervorrichtung, und zwar derart, um insbesondere die Pulverdichtstrompumpe entweder in einem Pulverförder-Betriebsmodus oder in einem Spül-Betriebsmodus zu betreiben. Der Steuereinrichtung ist eine Druckregelung zugeordnet, mit welcher die zum Betreiben der Pulverdichtstrompumpe erforderlichen Betätigungsdrücke bereitgestellt werden. Im Einzelnen dient die Druckregelung zum Einstellen und Halten eines vorab festgelegten oder festlegbaren Soll-Druckes an der mindestens einen Förderkammer der Pulverdichtstrompumpe und/oder zum Einstellen und Halten eines vorab festgelegten oder festlegbaren Betätigungsdruckes an dem Pulvereinlassventil bzw. dem Pulverauslassventil.

Hierzu ist die Druckregelung insbesondere ausgelegt, um in einem Pulverförder-Betriebsmodus der Pulverdichtstrompumpe an mindestens einem Ausgang der Druckregelung während einer Pulver-Ansaugphase einen vorab festgelegten oder festlegbaren Unterdruck bereitzustellen, und während einer Pulver-Ausstoßphase der Pulverdichtstrompumpe einen vorab festgelegten oder festlegbaren Überdruck bereitzustellen. Vorzugswese ist die Druckregelung ferner ausgelegt, um in einem Spül-Betriebsmodus der Pulverdichtstrompumpe an mindestens einem Ausgang der Druckregelung einen vorab festgelegten oder festlegbaren Überdruck bereitzustellen, der insbesondere höher ist als der Überdruck, der von der Druckregelung während einer Pulver-Ausstoßphase der Pulverdichtstrompumpe bereitgestellt wird.

Andererseits dient die Druckregelung vorzugsweise dazu, den zum Betätigen des als Quetschventil ausgeführten Pulvereinlassventils notwendigen und vorab festgelegten oder festlegbaren Betätigungsdruck bzw. den zum Betätigen des als Quetschventil ausgeführten Pulverauslassventils notwendigen Betätigungsdruck bereitzustellen.

Um einen ordnungsgemäßen Betrieb der Pulverdichtstrompumpe entweder in einem Pulverförder-Betriebsmodus oder in einem Spül-Betriebsmodus vorzugsweise automatisch überwachen zu können, ist erfindungsgemäß eine Gasmengenstrom-Erfassungseinrichtung vorgesehen, welche ausgelegt ist, um eine beim Einstellen und Halten des vorab festgelegten oder festlegbaren Soll-Druckes in der mindestens einen Förderkammer pro Zeiteinheit der Förderkammer zu- oder abgeführte Gasmenge zu erfassen. Alternativ oder zusätzlich hierzu ist die Gasmengenstrom-Erfassungseinrichtung ausgelegt, um eine beim Einstellen und Halten des vorab festgelegten oder festlegbaren Betätigungsdruckes dem Pulvereinlassventil bzw. dem Pulverauslassventil pro Zeiteinheit zugeführten Gasmenge zu erfassen.

Unter dem hierin verwendeten Begriff "Gasmengenstrom-Erfassungseinrichtung" ist allgemein ein Einrichtung zu verstehen, mit welcher direkt oder indirekt ein Gasmengenstrom erfasst oder auf einen Gasmengenstrom andersartig rückgeschlossen werden kann. Der Begriff "Gasmengenstrom" bezeichnet hierbei den Massen- oder Volumenstrom eines Gases an, welches im Betrieb der Pulverdichtstrompumpe einer pneumatisch betätigbaren Komponente der Pulverdichtstrompumpe zugeführt oder von einer pneumatisch betätigbaren Komponente der Pulverdichtstrompumpe abgeführt wird. Es handelt sich hierbei beispielsweise um die Masse oder das Volumen eines Transport-Druckgases, welches im Pulverförder-Betriebsmodus der Pulverdichtstrompumpe in der Pulver-Ausstoßphase pro Zeiteinheit der Förderkammer zugeführt wird.

Wenn im Laufe des Betriebes der Pulverdichtstrompumpe beispielsweise ein der Förderkammer zugeordnetes Filterelement alterungsbedingt (zumindest teilweise) verstopft, nimmt in der Pulver-Ausstoßphase der der Förderkammer zugeführte Gasmengenstrom im Vergleich zu einem Zustand ab, in welchem das Filterelement nicht verstopft ist.

Als weiteres Beispiel sei die bei Betätigung des Pulvereinlass-/ Pulverauslassventils dem entsprechende Ventil pro Zeiteinheit zugeführte Menge (Masse oder Volumen) an Betätigungsdruckgas genannt. In einem Fall, wenn das Pulvereinlass-/ Pulverauslassventil beispielsweise alterungsbedingt undicht wird, steigt der zur Betätigung des Pulvereinlass-/ Pulverauslassventils zugeführte Gasmengenstrom an.

Dies zeigt, dass der Gasmengenstrom als Maß der Funktionsfähigkeit der pneumatisch betätigbaren Komponente der Pulverdichtstrompumpe benutzt werden kann.

In diesem Zusammenhang kommt es nicht darauf an, dass mit der Gasmengenstrom-Erfassungseinrichtung ein quantitativer Wert des Gasmengenstroms erfasst oder andersartig ermittelt wird, was beispielsweise mit Hilfe eines Durchflusssensors oder dergleichen Einrichtung erfolgen kann. Eine solche Durchflusssensoreinrichtung kann beispielsweise ausgelegt sein zum Erfassen eines Volumen- oder Massendurchflusses in einer einen Ausgang der Druckregelung mit der Förderkammer strömungsmäßig verbindenden Druckgasleitung. Alternativ oder zusätzlich hierzu kann die Durchflusssensoreinrichtung ausgelegt sein zum Erfassen eines Volumen- oder Massendurchflusses in einer einen Ausgang der Druckregelung mit dem Pulvereinlassventil bzw. dem Pulverauslassventil strömungsmäßig verbindenden Druckgasleitung.

Wie es nachfolgend näher dargelegt wird, kann zum Erfassen bzw. Ermitteln eines qualitativen Wertes des Gasmengenstroms beispielsweise eine Einrichtung vorgesehen sein, mit welcher der Wert der beim Einstellen und Halten des Soll-Druckes in der mindestens einen Förderkammer pro Zeiteinheit zu- oder abgeführten Gasmenge erfasst bzw. ermittelt wird, und zwar auf Grundlage eines von der Druckregelung eingestellten Durchflussquerschnittes einer Drosseleinrichtung, und/oder mit welcher der Wert der beim Einstellen und Halten des Betätigungsdruckes an dem Pulvereinlassventil bzw. dem Pulverauslassventil pro Zeiteinheit zugeführten Gasmenge auf Grundlage eines von der Druckregelung eingestellten Durchflussquerschnittes einer Drosseleinrichtung erfasst bzw. ermittelt wird.

Gemäß der Erfindung weist die Pulverfördervorrichtung ferner eine Auswerteeinrichtung auf, welche ausgelegt ist, mindestens einen erfassten Gasmengenstromwert mit einem entsprechenden Soll-Wert zu vergleichen, wobei die Auswerteeinrichtung ferner ausgelegt ist, bei Abweichung des mindestens einen erfassten Gasmengenstromwertes von dem entsprechenden Soll-Wert vorzugsweise in Abhängigkeit von der Größe der Abweichung automatisch eine Fehler- und/oder Alarmmeldung auszugeben.

Der vorliegenden Erfindung liegt unter anderem die Erkenntnis zugrunde, dass bei einer pneumatisch betätigten Pulverdichtstrompumpe die Funktionsfähigkeit der Pulverdichtstrompumpe, und insbesondere die im Betrieb der Pulverdichtstrompumpe einem erhöhten Verschleiß ausgesetzten Komponenten der Pulverdichtstrompumpe im Hinblick auf deren Funktionsfähigkeit überwacht werden können, wenn die im Betrieb der Dichtstrompumpe pro Zeiteinheit den pneumatisch zu betätigenden Komponenten der Dichtstrompumpe zugeführten Gasmengen herangezogen werden. Wenn beispielsweise im Pulverförder-Betriebsmodus während einer Pulver-Ausstoßphase von der Gasmengenstrom-Erfassungseinrichtung erfasst wird, dass der Förderkammer der Pulverdichtstrompumpe nur noch eine verhältnismäßig geringe Menge an Transportdruckluft pro Zeiteinheit zugeführt werden muss, damit der vorab festgelegte oder festlegbare Überdruck (Soll-Druck) in der Förderkammer eingestellt und gehalten werden kann, zieht die Auswerteeinrichtung die Schlussfolgerung daraus, dass ein der Förderkammer zugeordnetes Filterelement möglicherweise verstopft oder zumindest teilweise verstopft und auszutauschen ist.

Bei pneumatisch betätigten Pulverdichtstrompumpen sind insbesondere die als Quetschventil ausgeführten Pulvereinlass- und Pulverauslassventile einem hohen Verschleiß ausgesetzt, da diese im Betrieb der Pulverdichtstrompumpe relativ häufig schalten müssen. Nach der erfindungsgemäßen Lösung kann von der Gasmengenstrom-Erfassungseinrichtung die Menge an Betätigungsdruckgas erfasst werden, die pro Zeiteinheit dem Quetschventil zugeführt wird, damit der vorab festgelegte oder festlegbare Betätigungsdruck an dem Quetschventil eingestellt und gehalten werden kann. Zeigt sich nun, dass die pro Zeiteinheit dem Quetschventil zugeführte Menge an Betätigungsdruckgas im Laufe der Zeit zunimmt, kann die Auswerteeinrichtung die Schlussfolgerung daraus ziehen, dass eine Undichtigkeit aufgetreten ist, die zur Folge hätten, dass das Quetschventil nicht mehr ordnungsgemäß arbeitet, so dass bei Betätigung des Ventils eine höhere Menge an Betätigungsdruckgas pro Zeiteinheit dem Ventil zugeführt wird im Vergleich zu einem Fall, wenn das Quetschventil ordnungsgemäß funktioniert und Betätigungsdruckluft nicht durch Leckagen entweichen kann.

Andererseits kann mit der erfindungsgemäßen Lösung auch ermittelt werden, ob das Ansaugen der Pulverdichtstrompumpe während der Pulver-Ansaugphasen ordnungsgemäß erfolgt. Da bei der Pulverdichtstrompumpe während einer Pulver-Ansaugphase in der Förderkammer der Pulverdichtstrompumpe ein vorab festgelegter oder festlegbarer Unterdruck angelegt wird, um mit Hilfe dieses Unterdruckes durch das geöffnete Pulvereinlassventil eine Pulverportion in die Förderkammer einzusaugen, kann die pro Zeiteinheit von der Förderkammer abzusaugende Menge an Gas herangezogen werden, um zu bestimmen, ob die Pulver-Ansaugphase gemäß dem vorgesehenen Ereignisablauf erfolgt. Liegt die in der Pulver-Ansaugphase pro Zeiteinheit abzusaugende Menge an Gas, die erforderlich ist, um in der Förderkammer den vorab festgelegten oder festlegbaren Unterdruck einzustellen und zu halten, oberhalb oder unterhalb eines entsprechenden Soll-Werts, so kann die Aussage getroffen werden, dass das Ansaugen des Pulvers in der Pulver-Ansaugphase nicht ordnungsgemäß erfolgt.

Gemäß der Erfindung ist ferner eine Sensoreinrichtung vorgesehen zum Erfassen mindestens eines sich bei Betätigung des Pulvereinlassventils am Pulvereinlassventil einstellenden Druckwertes, und/oder zum Erfassen mindestens eines sich bei Betätigung des Pulverauslassventils am Pulverauslassventil einstellenden Druckwertes, und/oder zum Erfassen mindestens eines sich in einer Pulver-Ansaugphase der Pulverdichtstrompumpe in der mindestens einen Förderkammer einstellenden Unterdruckwertes, und/oder zum Erfassen mindestens eines sich in einer Pulver-Ausstoßphase oder in einem Spül-Betriebsmodus der Pulverdichtstrompumpe in der mindestens einen Förderkammer einstellenden Überdruckwertes. Hierzu kann die Sensoreinrichtung beispielsweise mindestens einen am Ausgang der Druckregelung angeordneten Drucksensor aufweisen, der strömungsmäßig mit dem Pulvereinlassventil, dem Pulverauslassventil und/oder der Förderkammer verbunden oder verbindbar ist. Andererseits ist es aber auch denkbar, wenn dem Pulvereinlassventil und/oder dem Pulverauslassventil ein Drucksensor und der Förderkammer ein weiterer Drucksensor zugeordnet ist.

Die Sensoreinrichtung gehört funktionsmäßig zu der Druckregelung, da im Betrieb der Pulverdichtstrompumpe mit der Sensoreinrichtung erfasst und kontrolliert wird, ob sich die vorab festgelegten Druckwerte bei den entsprechend pneumatisch angesteuerten Komponenten der Pulverdichtstrompumpe tatsächlich einstellen, oder ob die Druckregelung entsprechend regelnd eingreifen muss. Insbesondere wird durch das Vorsehen der Sensoreinrichtung sichergestellt, dass sich im Pulverförder-Betriebsmodus und im Spül-Betriebsmodus der Pulverdichtstrompumpe die entsprechenden, vorab festgelegten oder festlegbaren Soll-Drücke an der mindestens einen Förderkammer der Pulverdichtstrompumpe einstellen. Beispielsweise ist im Pulverförder-Betriebsmodus vorgesehen, dass in einer Pulver-Ausstoßphase in der Förderkammer ein vorab festgelegter Überdruck von 1 bis 3 bar angelegt wird. Im Spül-Betriebsmodus hingegen sollte der sich in der Förderkammer einstellende Druckwert höher sein, beispielsweise 2 bis 5 bar.

Zusätzlich oder alternativ hierzu wird mit der Sensoreinrichtung ferner sichergestellt, dass bei Betätigung der als Quetschventil ausgeführten Pulvereinlass- und Pulverauslassventile sich dort ein vorab festgelegter Betätigungsdruck von beispielsweise 1 bis 6 bar (abhängig von dem Betriebsmodus der Pulverdichtstrompumpe) einstellt.

In diesem Zusammenhang ist es von Vorteil, wenn die Sensoreinrichtung mit der Druckregelung derart zusammenwirkt, dass die von der Sensoreinrichtung erfassten Druckwerte über eine Rückkopplung als Ist-Werte der Druckregelung zugeführt werden, wobei die Druckregelung die bei den pneumatisch ansteuerbaren Komponenten der Pulverdichtstrompumpe im Betrieb der Pulverdichtstrompumpe einzustellenden und zu haltenden Drücke auf den entsprechend vorab festgelegten oder festlegbaren Wert einregelt.

In einer bevorzugten Realisierung der erfindungsgemäßen Lösung ist vorgesehen, dass die Druckregelung einen Eingang und mindestens einen Ausgang aufweist, wobei der Eingang der Druckregelung strömungsmäßig mit einer Druckluftquelle verbunden oder verbindbar ist, welche einen vorab festgelegten oder festlegbaren konstanten Versorgungsdruck bereitstellt. Die Druckluftquelle ist beispielsweise als ein Eingangsdruckregler ausgeführt, der einen an einem Versorgungsanschluss anliegenden Eingangsdruck auf einen internen konstanten Versorgungsdruck von zum Beispiel 6 bis 8 bar einregelt.

Unabhängig von der konkreten Ausführung der Druckluftquelle ist es von Vorteil, wenn es sich hierbei um eine Einrichtung handelt, mit der ein vorab festgelegter oder festlegbarer konstanter Versorgungsdruck bereitgestellt wird.

Gemäß einem Aspekt der Erfindung ist in diesem Zusammenhang vorgesehen, dass die Druckregelung mindestens eine Drosseleinrichtung aufweist. Die mindestens eine Drosseleinrichtung ist ausgebildet zum örtlichen Einstellen eines Durchflussquerschnittes derart, dass an dem mindestens einen Ausgang der Druckregelung der an der mindestens einen Förderkammer anzulegende und vorab festgelegte oder festlegbare Soll-Druck und/oder der an dem Pulvereinlassventil bzw. dem Pulverauslassventil anzulegende und vorab festgelegte oder festlegbare Betätigungsdruck bereitgestellt wird.

Beispielsweise ist es denkbar, dass die mindestens eine Drosseleinrichtung der Druckregelung ausgelegt ist, um einen Durchflussquerschnitt einer mit der Förderkammer der Pulverdichtstrompumpe strömungsmäßig verbundenen oder verbindbaren Druckgasleitung örtlich einstellen zu können, so dass auf diese Weise ein vorab festlegbarer (definierter) Druckwert eines der Förderkammer im Betrieb der Pulverdichtstrompumpe zugeführten Transport-Druckgases einstellen zu können. Denkbar hierbei ist es insbesondere, dass die Drosseleinrichtung mindestens ein Drosselventil, insbesondere in Gestalt eines Regelventils, aufweist, welches ausgebildet ist zum Einstellen eines Druckwertes des während des Pulverförder-Betriebsmodus in die Förderkammer einzuleitenden Transport-Druckgases.

Alternativ oder zusätzlich hierzu ist das mindestens eine Drosselventil vorzugsweise derart ausgebildet, um einen Druckwert des während des Spül-Betriebsmodus in die Förderkammer einzuleitenden Spül-Druckgases auf einen vorab festgelegten oder festlegbaren (definierten) Wert einzustellen.

In einer besonders leicht zu realisierenden aber dennoch effizienten Ausführungsform, weist das Drosselventil ein ortsfestes Ventilteil, insbesondere in Gestalt eines Ventilsitzes, und ein relativ dazu bewegliches und dadurch einstellbares Ventilteil zur Veränderung der Öffnungsweite eines Drosselkanals des mindestens einen Drosselventils auf, wobei die geometrische Form des einstellbaren Ventilteils so gewählt ist, dass das Drosselventil eine Durchflusskennlinie mit mindestens zwei im Wesentlichen linearen Bereichen aufweist. Die mindestens zwei im Wesentlichen linearen Bereiche der Durchflusskennlinie weisen dabei vorab festgelegte, unterschiedliche Steigungen auf.

In diesem Zusammenhang ist es denkbar, dass eine zu der Pulverfördervorrichtung vorgesehene Steuereinrichtung ausgebildet ist, im Pulverförder-Betriebsmodus das Drosselventil derart anzusteuern, dass der Druckgas-Durchfluss durch das Drosselventil in einem ersten im Wesentlichen linearen Bereich der Durchflusskennlinie liegt, und im Spül-Betriebsmodus das Drosselventil derart anzusteuern, dass der Druckgas-Durchfluss durch das Drosselventil in einem zweiten im Wesentlichen linearen Bereich der Durchflusskennlinie liegt.

Unabhängig von der konkreten Ausgestaltung der zu der Druckregelung gehörenden Drosseleinrichtung sollte diese vorzugsweise ausgelegt sein, in Abhängigkeit von mindestens einem sich im Betrieb der Pulverdichtstrompumpe einstellenden und beispielsweise mit Hilfe der bereits erwähnten Sensoreinrichtung erfassten Druckwert den Durchflussquerschnitt der mindestens einen Drosseleinrichtung derart einzustellen, dass der mindestens eine erfasste Druckwert (Ist-Wert) dem an der mindestens einen Förderkammer anzulegenden Soll-Druck bzw. dem an dem Pulvereinlass-/ Pulverauslassventil anzulegenden Betätigungsdruck entspricht.

Gemäß einer bevorzugten Weiterbildung der zuletzt genannten Ausführungsformen ist vorgesehen, dass die Gasmengenstrom-Erfassungseinrichtung ausgelegt ist, den Wert der beim Einstellen und Halten des Soll-Druckes in der mindestens einen Förderkammer pro Zeiteinheit zu- oder abgeführten Gasmenge und/oder den Wert der beim Einstellen und Halten des Betätigungsdruckes an dem Pulvereinlassventil bzw. dem Pulverauslassventil pro Zeiteinheit zugeführten Gasmenge auf Grundlage eines von der Druckregelung eingestellten Durchflussquerschnittes der mindestens einen Drosseleinrichtung zu erfassen. Mit anderen Worten, anhand der Stellgröße der Druckregelung, die bei der hier beschriebenen Ausführungsform dem Durchflussquerschnitt der mindestens einen Drosseleinrichtung entspricht, wird auf einen quantitativen oder qualitativen Wert einer pro Zeiteinheit durch die Drosseleinrichtung strömenden und der mindestens einen Förderkammer bzw. dem Pulvereinlass-/ Pulverauslassventil zugeführten Gasmenge rückgeschlossen. Hierbei handelt es sich um den Gasmengenstrom, der erforderlich ist, damit in der mindestens einen Förderkammer bzw. an dem Pulvereinlass-Pulverauslassventil der vorab festgelegte (definierte) Druckwert (Soll-Wert) eingestellt und gehalten werden kann.

Beispielsweise ist die Auswerteeinrichtung ausgelegt, automatisch auf eine Undichtigkeit in dem Pulvereinlassventil bzw. in dem Pulverauslassventil oder auf eine Fehlfunktion des Pulvereinlassventils bzw. Pulverauslassventils rückzuschließen und eine entsprechende Fehler- und/oder Alarmmeldung auszugeben, wenn von der Gasmengenstrom-Erfassungseinrichtung erfasst oder andersartig ermittelt wird, dass die pro Zeiteinheit dem Pulvereinlass- bzw. Pulverauslassventil zugeführte Menge an Betätigungsdruckgas, die erforderlich ist, um den vorab festgelegten oder festlegbaren Betätigungsdruck (= Soll-Druck) an dem Pulvereinlass- bzw. Pulverauslassventil anzulegen, größer ist als ein vorab festgelegter oder festlegbarer Gasmengenstrom zuzüglich einer ggf. vorgesehenen Toleranz (= Vergleichswert).

Bei dem vorab festgelegter oder festlegbarer Gasmengenstrom handelt es sich um den Soll-Wert, der bei dem von der Auswerteeinrichtung vorzunehmenden Vergleich herangezogen wird. Dieser Soll-Wert kann beispielsweise bei Inbetriebnahme der Pulverfördervorrichtung aufgenommen und in der Auswerteeinrichtung entsprechend hinterlegt bzw. abgespeichert sein. Denkbar ist es aber auch, dass der Soll-Wert regelmäßig neu generiert wird, beispielsweise immer dann, wenn die Pulverfördervorrichtung in einem Ruhezustand vorliegt.

Zusätzlich oder alternativ zu der zuvor genannten Ausführungsform der Auswerteeinrichtung ist gemäß einem weiteren Aspekt der Erfindung die Auswerteeinrichtung ausgelegt, automatisch auf eine Verstopfung, Alterung oder Fehlfunktion eines der Förderkammer zugeordneten Filterelements oder Filters rückzuschließen und eine entsprechende Fehler- und/oder Alarmmeldung auszugeben, wenn von der Gasmengenstrom-Erfassungseinrichtung in mindestens einer Pulver-Ausstoßphase oder im Spül-Betriebsmodus der Pulverdichtstrompumpe erfasst wird, dass die pro Zeiteinheit der Förderkammer zuzgeführte Menge an Druckgas, die erforderlich ist, um den vorab festgelegten oder festlegbaren Soll-Druck in der Förderkammer einzustellen und zu halten, abweicht von einem vorab festgelegten oder festlegbaren Gasmengenstrom zuzüglich einer ggf. vorgesehenen Toleranz.

Beispielsweise kann die Auswerteeinrichtung ausgelegt sein, automatisch auf eine Verstopfung eines der Förderkammer zugeordneten Filterelements oder Filters rückzuschließen und eine entsprechende Fehler- und/oder Alarmmeldung auszugeben, wenn von der Gasmengenstrom-Erfassungseinrichtung in mindestens einer Pulver-Ansaugphase der Pulverdichtstrompumpe erfasst wird, dass die pro Zeiteinheit der Förderkammer abgeführten Menge an Druckgas, die erforderlich ist, um einen vorab festgelegten oder festlegbaren Unterdruck in der Förderkammer einzustellen und zu halten, abweicht von einem vorab festgelegten oder festlegbaren Gasmengenstrom zuzüglich einer ggf. vorgesehenen Toleranz.

Gemäß bevorzugten Realisierungen der erfindungsgemäßen Pulverfördervorrichtung ist vorgesehen, dass das Pulvereinlassventil und/oder das Pulverauslassventil als Quetschventil ausgeführt sind/ist, und zwar von der Art, bei welcher ein flexibler Schlauch einen Ventilkanal auf der Schlauchinnenseite von einer dem Quetschventil zugeordneten Druckkammer auf der Schlauchaußenseite trennt, wobei der Schlauch durch den Betätigungsdruck von in die Druckkammer eingeleitetem Betätigungs-Druckgas zusammenquetschbar und dadurch der Ventilkanal verschließbar ist. Wie bereits eingangs ausgeführt, wird der zum Betätigen des entsprechenden als Quetschventil ausgeführten Pulvereinlassventils bzw. Pulverauslassventils notwendige Betätigungsdruck von der Druckregelung der Steuereinrichtung bereitgestellt.

In diesem Fall ist es denkbar, dass die bereits erwähnte Sensoreinrichtung mindestens einen dem Pulvereinlassventil zugeordneten Drucksensor aufweist, wobei dieser dem Pulvereinlassventil zugeordnete Drucksensor dazu dient, einen sich bei Betätigung des Pulvereinlassventils in der Druckkammer des Pulvereinlassventils tatsächlich einstellender Druckwert (Ist-Wert) zu erfassen. Zusätzlich oder alternativ hierzu ist es von Vorteil, wenn die Sensoreinrichtung mindestens einen dem Pulverauslassventil zugeordneten Drucksensor aufweist, welcher dazu dient, einen sich bei Betätigung des Pulverauslassventils in der Druckkammer des Pulverauslassventils tatsächlich einstellenden Druckwert (Ist-Wert) zu erfassen.

Der dem Pulvereinlassventil zugeordnete Drucksensor sowie der dem Pulverauslassventil zugeordnete Drucksensor können jeweils in der Druckkammer des entsprechenden als Quetschventil ausgeführten Ventils angeordnet sein. Selbstverständlich ist es aber auch denkbar, den Drucksensor in einer in die Druckkammer des entsprechenden Quetschventils mündende Druckluftleitung anzuordnen, über welche das Betätigungs-Druckgas der Druckkammer des Quetschventils zugeführt wird.

Im Hinblick auf die Pulverdichtstrompumpe der Pulverfördervorrichtung ist bei bevorzugten Realisierungen der erfindungsgemäßen Lösung vorgesehen, dass die Förderkammer der Pulverdichtstrompumpe eine Kammerwand aufweist, welche mindestens auf einen Teil ihrer Länge zwischen einem Pulvereinlass und einem Pulverauslass der Förderkammer durch einen Filter gebildet ist, wobei der Filter die Förderkammer umgibt und die Förderkammer von einer Zwischenwand trennt, welche den Filter umgibt und welche zwischen den Filter und einem Förderkammergehäuse gebildet ist, wobei der Filter für Gas, aber nicht für Beschichtungspulver durchlässig ist.

Bei dieser Realisierung ist es von Vorteil, wenn die bereits genannte Sensoreinrichtung mindestens einen der Förderkammer zugeordneten Drucksensor aufweist, um mit Hilfe des der Förderkammer zugeordneten Drucksensors einen sich in einer Pulver-Ausstoßphase der Pulverdichtstrompumpe in der zwischen dem Filter und dem Förderkammergehäuse gebildeten Zwischenkammer tatsächlich einstellenden Druckwert eines an der Förderkammer angelegten Überdruckes zu erfassen.

Gemäß einem Aspekt der vorliegenden Erfindung ist die Gasmengenstrom-Erfassungseinrichtung ausgelegt, im Betrieb der Pulverdichtstrompumpe zumindest zeitweise mindestens einen der folgenden zeitlichen Verläufe zu erfassen und mit einem entsprechend vorgegebenen zeitlichen Verlauf zu vergleichen:
- den zeitlichen Verlauf einer bei Betätigung des Pulvereinlassventils pro Zeiteinheit dem Pulvereinlassventil zugeführten Menge an Betätigungsdruckgas;
- den zeitlichen Verlauf einer bei Betätigung des Pulverauslassventils (8) pro Zeiteinheit dem Pulverauslassventil zugeführten Menge an Betätigungsdruckgas;
- den zeitlichen Verlauf einer in Pulver-Ansaugphasen der Pulverdichtstrompumpe pro Zeiteinheit von der mindestens einen Förderkammer abgeführten Menge an Gas; und
- den zeitlichen Verlauf einer in Pulver-Ausstoßphasen der Pulverdichtstrompumpe pro Zeiteinheit der mindestens einen Förderkammer zugeführten Menge an Transportdruckgas.

Bei diesem Aspekt ist es insbesondere von Vorteil, wenn die Auswerteeinrichtung ausgelegt ist, bei einer Abweichung von mindestens einem erfassten Zeitverlauf von dem entsprechend vorgegebenen Zeitverlauf vorzugsweise in Abhängigkeit von der Größe und/oder dem zeitlichen Gradienten einer Differenz zwischen dem vorgegebenen Zeitverlauf und dem erfassten Zeitverlauf automatisch eine Fehler- und/oder Alarmmeldung auszugeben.

Die Erfindung betrifft nicht nur eine Pulverfördervorrichtung, sondern auch ein Verfahren zum Betreiben einer Pulverfördervorrichtung, wobei das Verfahren die folgenden Verfahrensschritte aufweist:
- Einstellen und Halten eines vorab festgelegten oder festlegbaren Unterdruckes in einer Förderkammer einer Pulverdichtstrompumpe während einer Pulver-Ansaugphase der Pulverdichtstrompumpe; und/oder
   Einstellen und Halten eines vorab festgelegten oder festlegbaren Überdruckes in einer Förderkammer einer Pulverdichtstrompumpe während einer Pulver-Ausstoßphase der Pulverdichtstrompumpe; und/oder
   Einstellen und Halten eines vorab festgelegten oder festlegbaren Überdruckes in einer Förderkammer einer Pulverdichtstrompumpe während eines Spül-Betriebsmodus der Pulverdichtstrompumpe; und/oder
   Einstellen und Halten eines vorab festgelegten oder festlegbaren Betätigungsdruckes in einem als pneumatisch betätigbares Quetschventil ausgeführten Pulvereinlassventil der Pulverdichtstrompumpe und/oder in einem als pneumatisch betätigbares Quetschventil ausgeführten Pulverauslassventil der Pulverdichtstrompumpe;
- Erfassen einer von der Förderkammer während der Pulver-Ansaugphase abzusaugenden Gasstrommenge, die erforderlich ist, um den vorab festgelegten oder festlegbaren Unterdruck in der Förderkammer einstellen und halten zu können; und/oder
   Erfassen einer der Förderkammer während der Pulver-Ausstoßphase zugeführten Gasstrommenge, die erforderlich ist, um den vorab festgelegten oder festlegbaren Überdruck in der Förderkammer einstellen und halten zu können; und/oder
   Erfassen einer der Förderkammer in dem Spül-Betriebsmodus der Pulverdichtstrompumpe zugeführten Gasstrommenge, die erforderlich ist, um den vorab festgelegten oder festlegbaren Überdruck in der Förderkammer einstellen und halten zu können; und/oder
   Erfassen einer dem Pulvereinlassventil und/oder Pulverauslassventil bei Betätigung des entsprechenden Ventils zugeführten Betätigungsgasstrommenge, die erforderlich ist, um den vorab festgelegten oder festlegbaren Betätigungsdruck in dem Pulvereinlassventil und/oder Pulverauslassventil einstellen und halten zu können;
- Vergleichen der mindestens einen erfassten Gasstrommenge mit einem entsprechenden Soll-Wert; und
- Ausgeben einer Fehler- und/oder Alarmmeldung, wenn die mindestens eine erfasste Gasstrommenge von dem entsprechenden Soll-Wert einschließlich eines ggf. vorhandenen Toleranzbereiches abweicht.

Nachfolgend wird die Erfindung unter Bezugnahme auf die beiliegenden Zeichnungen anhand von exemplarischen Ausführungsformen näher beschrieben.

Es zeigen:
- Fig. 1:: eine schematische Darstellung einer ersten exemplarischen Ausführungsform einer Pulverfördervorrichtung gemäß der vorliegenden Erfindung;
- Fig. 2:: eine schematische Darstellung einer weiteren exemplarischen Ausführungsform einer Pulverfördervorrichtung gemäß der vorliegenden Erfindung; und
- Fig. 3:: ein exemplarisches Zeit-Steuerprogramm der Pulverdichtstrompumpe im Pulverförder-Betriebsmodus.

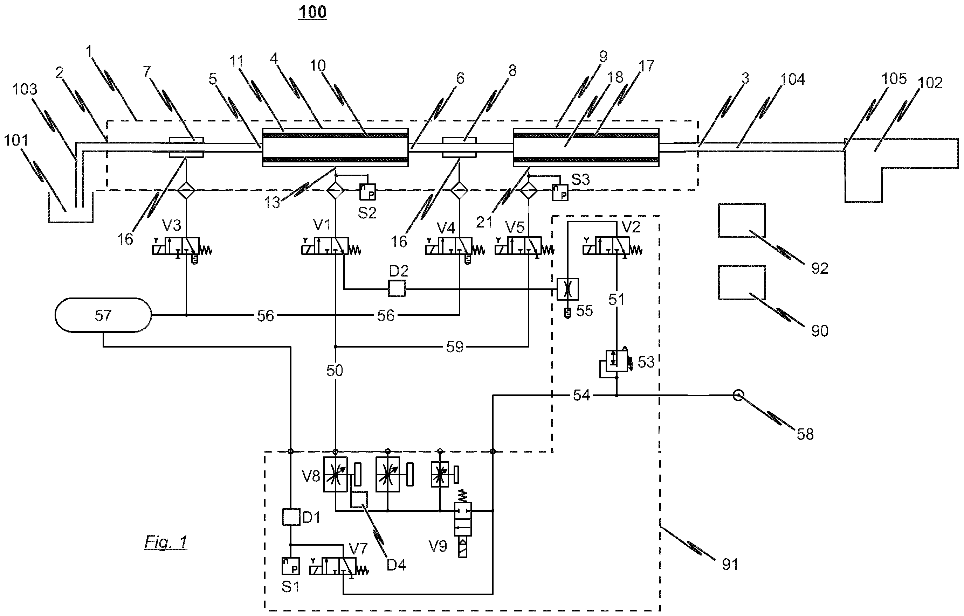

Nachfolgend wird unter Bezugnahme auf die Darstellung in Fig. 1 eine erste exemplarische Ausführungsform der erfindungsgemäßen Pulverfördervorrichtung 100 beschrieben. Die Pulverfördervorrichtung 100 dient insbesondere zum Fördern von Beschichtungspulver von einem ersten Pulverreservoir 101 zu einer stromabwärts von der Pulverfördervorrichtung 100 angeordneten Pulversprühbeschichtungspistole 102. Anstelle der Pulversprühbeschichtungspistole 102 kann auch eine andere Einrichtung zum Versprühen von Beschichtungspulver auf ein zu beschichtendes Objekt oder aber auch ein zweites Pulverreservoir zum Einsatz kommen.

Die Pulverfördervorrichtung 100 gemäß der in Fig. 1 dargestellten exemplarischen Ausführungsform weist mindestens eine (in der Zeichnung gemäß Fig. 1 genau eine) Pulverdichtstrompumpe 1 auf. Der Pulvereinlass 2 der Pulverdichtstrompumpe 1 ist mit Hilfe einer Pulverleitung 103, insbesondere mit Hilfe eines Ansaugrohres oder dergleichen, strömungsmäßig mit dem ersten Pulverreservoir 101 verbunden oder verbindbar. Am entgegengesetzten Endbereich der Pulverdichtstrompumpe 1 ist ein Pulverauslass 3 vorgesehen, welcher mit Hilfe einer Pulverleitung 104, insbesondere mit Hilfe eines Pulverschlauches, mit einem Beschichtungspulvereinlass 105 der Pulversprühbeschichtungspistole 102 verbunden bzw. verbindbar ist.

Obwohl in Fig. 1 nicht explizit dargestellt, sind bei der exemplarischen Ausführungsform der Pulverfördervorrichtung 100 sowohl der Pulvereinlass 2 als auch der Pulverauslass 3 der Pulverdichtstrompumpe 1 jeweils als Schlauchanschlussstutzen ausgebildet, an den die entsprechende Pulverleitung 103 bzw. 104 aufsteckbar und mit einer Schlauchklemme fixierbar ist. Selbstverständlich kommen aber auch andere Ausführungsformen für den Pulvereinlass 2 bzw. den Pulverauslass 3 der Pulverdichtstrompumpe 1 in Frage.

Die bei der in Fig. 1 dargestellten exemplarischen Ausführungsform der Pulverfördervorrichtung 100 zum Einsatz kommende Pulverdichtstrompumpe 1 zeichnet sich unter anderem dadurch aus, dass diese als Ein-Kammer-Pulverdichtstrompumpe ausgebildet ist, wobei zur Förderung von Beschichtungspulver von dem ersten Pulverreservoir 101 zu der Pulversprühbeschichtungspistole 102 bzw. zu einer anderen Einrichtung zur Sprühbeschichtung von Gegenständen oder zu einem weiteren Pulverreservoir nur eine einzige Pulverförderkammer 4 vorgesehen ist. Allerdings ist die Erfindung nicht auf Pulverfördervorrichtungen beschränkt, bei denen eine Ein-Kammer-Pulverdichtstrompumpe zum Einsatz kommt. Vielmehr umfasst die Erfindung auch solche Pulverfördervorrichtungen, bei denen Mehr-Kammer-Pulverdichtstrompumpen zum Einsatz kommen.

Die Pulverdichtstrompumpe 1, welche bei der in Fig. 1 schematisch dargestellten Pulverfördervorrichtung 100 zum Einsatz kommt, ist hier jedoch als Ein-Kammer-Pulverdichtstrompumpe ausgebildet, wobei zur Förderung von Beschichtungspulver von dem ersten Pulverreservoir 1 zu der Pulversprühbeschichtungspistole 102 bzw. zu einer anderen Einrichtung zur Sprühbeschichtung von Gegenständen oder zu einem weiteren Pulverreservoir nur eine einzige Pulverförderkammer 4 vorgesehen ist. Diese Pulverförderkammer 4 weist an einem ersten Endbereich einen Pulvereinlass 5 auf, welcher in Richtung des Pulvereinlasses 2 der Pulverdichtstrompumpe 1 zeigt. Ferner weist die Pulverförderkammer 4 einen in Richtung des Pulverauslasses 3 der Pulverdichtstrompumpe zeigenden Pulverauslass 6 auf. Am Pulvereinlass 5 der Pulverförderkammer 4 ist unmittelbar angrenzend ein Pulvereinlassventil 7 angeordnet, und zwar derart, dass dieses Pulvereinlassventil 7 zwischen dem Pulvereinlass 5 der Pulverförderkammer 4 und dem Pulvereinlass 2 der Pulverdichtstrompumpe 1 liegt. In gleicher Weise ist unmittelbar angrenzend an den Pulverauslass 6 der Pulverförderkammer 4 ein Pulverauslassventil 8 angeordnet.

Wenn bei der Pulverfördervorrichtung 100 eine als Ein-Kammer-Pulverdichtstrompumpe ausgebildete Pulverdichtstrompumpe zum Einsatz kommt, ist es von Vorteil, wenn am Pulverauslassbereich der Pulverdichtstrompumpe 1 das Pulverauslassventil 8 nicht unmittelbar zwischen dem Pulverauslass 6 der Pulverförderkammer 4 und dem Pulverauslass 3 der Pulverdichtstrompumpe 1 angeordnet ist. Vielmehr ist bei diesen Ausführungsformen von Vorteil, wenn zwischen dem Pulverauslassventil 8 und dem Pulverauslass 3 der Pulverdichtstrompumpe 1 noch eine Zusatzdruckluft-Einlassvorrichtung 9 angeordnet ist. Wie es anschließend näher beschrieben wird, dient diese Zusatzdruckluft-Einlassvorrichtung 9 zum bedarfsweisen Einspeisen von zusätzlicher Transportdruckluft in den Pulverweg zwischen dem Pulverauslassventil 8 und dem Pulverauslass 3 der Pulverdichtstrompumpe 1.

An dieser Stelle ist darauf hinzuweisen, dass es nach der Erfindung nicht wesentlich ist, die Zusatzdruckluft-Einlassvorrichtung 9 zwischen dem Pulverauslassventil 8 und dem Pulverauslass 3 der Ein-Kammer-Pulverdichtstrompumpe 1 anzuordnen. Die mit der Zusatzdruckluft-Einlassvorrichtung 9 erzielbaren Effekte, die nachfolgend näher beschrieben werden, lassen sich auch dann realisieren, wenn eine Zusatzdruckluft-Einlassvorrichtung 9 hinter dem Pulverauslass 3 der Pulverdichtstrompumpe 1 angeordnet ist.

Obwohl in den Zeichnungen nicht dargestellt, ist bei vorteilhaften Realisierungen der erfindungsgemäßen Pulverfördervorrichtung 100 zwischen der Zusatzdruckluft-Einlassvorrichtung 9 der als Ein-Kammer-System ausgebildeten Pulverdichtstrompumpe 1 und dem Pulverauslass 3 der Pulverdichtstrompumpe 1 noch ein weiteres Ventil, insbesondere Quetschventil vorgesehen, welches dann die Funktion des Pulverauslassventils übernimmt, da es unmittelbar am Pulverauslass 3 der Pulverdichtstrompumpe 1 angeordnet ist.

Wie es insbesondere der Darstellung in Fig. 1 entnommen werden kann, liegen der Pulvereinlass 3 der Pulverdichtstrompumpe 1, das Pulvereinlassventil 7, der Pulvereinlass 5 der Pulverförderkammer 4, die Pulverförderkammer 4, der Pulverauslass 6 der Pulverkammer 4, die Zusatzdruckluft-Einlassvorrichtung 9 sowie der Pulverauslass 3 der Pulverdichtstrompumpe 1 entlang einer gemeinsamen Längsachse. Mit anderen Worten, der Pulvereinlas 2 der Pulverdichtstrompumpe 1 ist am entgegengesetzten Ende des Pulverauslasses 3 der Pulverdichtstrompumpe 1 vorgesehen.

An dieser Stelle ist darauf hinzuweisen, dass die Erfindung nicht auf Pulverfördervorrichtungen beschränkt ist, bei denen Pulverdichtstrompumpen zum Einsatz kommen, deren Pulvereinlass 2 und Pulverauslass 3 an entgegengesetzten Endbereichen angeordnet sind. Vielmehr eignet sich die Erfindung auch bei Pulverdichtstrompumpen, deren Pulvereinlass und Pulverauslass an ein und demselben Endbereich der Pulverdichtstrompumpe vorgesehen sind.

Nachfolgend werden der Aufbau und die Funktionsweise der Pulverförderkammer 4 der beispielsweise in Fig. 1 schematisch dargestellten Ausführungsform der bei der erfindungsgemäßen Pulverfördervorrichtung 100 zum Einsatz kommenden Pulverdichtstrompumpe 1 näher beschrieben.

Wie es insbesondere der schematischen Darstellung in Fig. 1 entnommen werden kann, ist die Pulverförderkammer 4 zwischen ihrem Pulvereinlass 5 und ihrem Pulverauslass 6 durch die zylindrische Wand eines rohrartigen Filters 10 gebildet. Dieser rohrartige Filter 10 ist für Luft, jedoch nicht für Beschichtungspulver durchlässig und kann beispielsweise aus Sintermaterial bestehen. Der als Filterrohr ausgebildete Filter 10 ist von einer Zwischenkammer 11 umgeben, die auf ihre Außenseite von einem Gehäuse der Pulverförderkammer 4 begrenzt ist.

Durch das Gehäuse mündet eine Luftaustauschöffnung 13, welche strömungsmäßig an ein Steuerventil V1 (hier: Magnetventil) angeschlossen ist. Über das Steuerventil V1 ist die Pulverförderkammer 4 wechselweise mit Transportdruckluft aus einer Druckluftversorgungsleitung 50 versorgbar oder mit Vakuum bzw. Unterdruck einer Vakuumquelle beaufschlagbar.

Bei der beispielsweise in Fig. 1 schematisch dargestellten Ausführungsform der erfindungsgemäßen Pulverfördervorrichtung 100 weist die Vakuumquelle einen Injektor 55 auf, welchem Injektordruckluft von einer Druckluftversorgungsleitung 51 bzw. einer Druckluftversorgung 58, beispielsweise über einen Druckregler 53 und ein weiteres Steuerventil V2 (hier: Magnetventil), zugeführt wird.

Bei der dargestellten Ausführungsform ist die Druckluftversorgung 58 als ein Eingangsdruckregler ausgeführt, der einen an einem Versorgungsanschluss (nicht gezeigt) anliegenden Eingangsdruck auf einen internen konstanten Versorgungsdruck von beispielsweise 6 bis 8 bar einzuregeln.

Unabhängig von der konkreten Ausführung der Druckluftversorgung 58 ist es von Vorteil, wenn es sich hierbei um eine Einrichtung handelt, mit der ein vorab festgelegter oder festlegbarer konstanter Versorgungsdruck bereitgestellt wird.

Um während einer Saugphase der im Pulverförder-Betriebsmodus betriebenen Pulverdichtstrompumpe 1 über den Pulvereinlass 2 der Pulverdichtstrompumpe 1 aus dem ersten Pulverreservoir 101 Beschichtungspulver in die Pulverförderkammer 4 einsaugen zu können, wird das am Pulverauslass 6 der Pulverförderkammer 4 angeordnete Pulverauslassventil 8 geschlossen und das zwischen dem Pulvereinlass 2 der Pulverdichtstrompumpe 1 und dem Pulvereinlass 5 der Pulverförderkammer 4 angeordnete Pulvereinlassventil 7 geöffnet. Gleichzeitig mit dem Betätigen des Pulverauslassventils 8 und des Pulvereinlassventils 7 oder unmittelbar anschließend daran wird über das Steuerventil V1 und der damit verbundenen Luftaustauschöffnung 13 die Pulverförderkammer 4 mit der Vakuumquelle strömungsmäßig verbunden, so dass in der Pulverförderkammer 4 ein Unterdruck anliegt und Beschichtungspulver aus dem ersten Pulverreservoir 101 eingesaugt werden kann.

Nach dem Einsaugen von Beschichtungspulver in die Pulverförderkammer 4 erfolgt ein Wechsel von der Saugphase zu der Ausstoßphase von Beschichtungspulver aus der Förderkammer 4. Hierzu wird das Pulvereinlassventil 7 geschlossen und das Pulvereinlassventil 8 geöffnet, während das Steuerventil V1 eine strömungsmäßige Verbindung der Luftaustauschöffnung 13 mit der Druckluftversorgungsleitung 50 bereitstellt, so dass die während der Saugphase in die Pulverförderkammer zuvor eingesaugte Beschichtungspulverportion mittels der über die Luftaustauschöffnung 13 zugeführten Transportdruckluft durch das offene Pulverauslassventil ausgestoßen wird. Wie es dem Pneumatikschema gemäß Fig. 1 entnommen werden kann, ist bei dieser Ausführungsform die Druckluftversorgungsleitung 50 über eine Druckregelung 91 mit der Druckluftversorgung 58 strömungsmäßig verbunden.

Anschließend erfolgt wieder die Betriebsphase des Einsaugens von Beschichtungspulver über den Pulvereinlass 2 der Pulverdichtstrompumpe 1 und über das geöffnete Pulvereinlassventil 7. Dieser Wechsel der Betriebsphasen wiederholt sich im Pulverförder-Betriebsmodus der Pulverdichtstrompumpe ständig.

Hierin wird unter dem Begriff "Pumpenzyklus" ein Zyklus bestehend aus einer Saugphase und einer Ausstoßphase verstanden.

Bei der erfindungsgemäßen Pulverfördervorrichtung 100 sind die eingangs- und ausgangsseitig der Pulverförderkammer 4 angeordneten Ventile (Pulvereinlassventil 7, Pulverauslassventil 8) jeweils als Quetschventil ausgebildet. Bei der in Fig. 1 schematisch dargestellten Ausführungsform weisen die jeweils als Quetschventil ausgebildeten Pulvereinlass- und Pulverauslassventile 7, 8 jeweils einen flexiblen, elastischen Schlauch auf, der als Ventilkanal dient. Der flexible, elastische Schlauch ist zum Schließen des entsprechenden Ventils (Pulvereinlassventil 7, Pulverauslassventil 8) mittels Betätigungsdruckluft in einer den flexiblen, elastischen Schlauch umgebenen Druckkammer zusammenquetschbar.

Zu diesem Zweck ist in jeder Druckkammer jeweils eine Luftaustauschöffnung 16 vorgesehen, die an ein entsprechendes Steuerventil V3, V4 (hier: Magnetventil) angeschlossen ist. Die Steuerventile V3, V4 dienen dazu, wechselweise die Druckkammern der beiden jeweils als Quetschventil ausgebildeten Pulvereinlass- bzw. Pulverauslassventile 7, 8 mit Überdruck aus einer Druckluftversorgungsleitung 56 zu beaufschlagen.

Wie in Fig. 1 schematisch dargestellt, kann die Druckluftversorgungsleitung 56 mit einem Druckspeicher 57 verbunden sein. Bei der Ausführungsform gemäß Fig. 1 ist dieser Druckspeicher 57 seinerseits über die Druckregelung 91 mit der Druckluftversorgung 58 verbunden. Selbstverständlich ist es aber auch denkbar, dass die Druckluftversorgungsleitung 56 direkt mit der Druckluftversorgung 58 (d.h. ohne Zwischenschaltung des Druckspeichers 57) verbunden ist.

Der flexible, elastische Schlauch des als Quetschventil ausgebildeten Pulvereinlassventils 7 bzw. Pulverauslassventils 8 hat vorzugsweise eine solche Elastizität oder Eigenspannung, dass er sich nach Wegfall des Druckes der Betätigungsdruckluft in der Druckkammer selbsttätig wieder streckt und dadurch den entsprechenden Ventilkanal öffnet. Um das Öffnen der Quetschventile zu unterstützen und somit die realisierbare Schaltfrequenz der Pulverdichtstrompumpe 1 zu erhöhen, ist es alternativ oder zusätzlich denkbar, dass über die entsprechenden Luftaustauschöffnungen 16 in den Druckkammern wahlweise ein Unterdruck angelegt wird.

Um zu erreichen, dass bei der in Fig. 1 schematisch dargestellten Pulverfördervorrichtung 100 stromabwärts des Pulverauslasses 3 der Ein-Kammer-Pulverdichtstrompumpe 1 ein homogener Pulverstrom ohne störende Pulsaktionen vorliegt, kommt die bereits erwähnte Zusatzdruckluft-Einlassvorrichtung 9 zum Einsatz, welche bei der dargestellten exemplarischen Ausführungsform am Ausgang des Pulverauslassventils 8 bzw. am Pulverauslass 3 der Pulverdichtstrompumpe 1 vorgesehen ist, um dort bedarfsweise Zusatz-Transportdruckluft in den Pulverweg einspeisen zu können.

Bei der in Fig. 1 dargestellten exemplarischen Ausführungsform der erfindungsgemäßen Pulverfördervorrichtung 100 weist die zum Einsatz kommende ZusatzDruckluft-Einlassvorrichtung 9 ein Filterrohr 17 auf, welches einen Umfang von mindestens 180° (bei der dargestellten Ausführungsform einen Umfang von 360°) hat und zumindest auf einer Teillänge des entsprechenden Pulverweges eine Kanalwandinnenfläche auf mindestens 180° (bei der in Fig. 1 dargestellten Ausführungsform eine Kanalwandinnenfläche auf 360°) des Pulverwegumfangs bildet.

Mit anderen Worten, bei der in Fig. 1 schematisch dargestellten Ausführungsform der erfindungsgemäßen Pulverfördervorrichtung 100 weist die Zusatzdruckluft-Einlassvorrichtung 9 ein Filterrohr 17 auf, welches den entsprechenden Pulverweg zumindest auf einer Teillänge um 360° umgibt, so dass die von der Pulverförderkammer 4 der Pulverdichtstrompumpe 1 während einer Pulverausstoßphase ausgestoßene Pulverportion durch den von dem Filterrohr 17 gebildeten Filterrohrkanal 18 homogen hindurch strömen kann.

Eine bei der in Fig. 1 schematisch dargestellten Ausführungsform als Druckluftringkammer ausgebildete Druckluftkammer umgibt das Filterrohr 17 auf seinem Außenumfang. Die hier als Druckluftringkammer ausgebildete Druckluftkammer wird an ihrem radial inneren Umfang von dem Filterrohr 17 und mit Abstand von dem Filterrohr 17 an ihrem radial äußerem Umfang von einem Gehäuse umgeben. In dem Gehäuse ist eine Luftaustauschöffnung 21 vorgesehen, über welche bedarfsweise Druckluft von einer Druckluftleitung 59 über ein Steuerventil V5 (hier: Magnetventil) in die Druckluftkammer und von dort durch das Filterrohr 17 in den Filterrohrkanal 18 strömen kann.

Abhängig von der pro Zeiteinheit in den Pulverweg einzuspeisenden Menge an Zusatz-Transportdruckluft ist die Druckluftkammer und der von dem Filterrohr 17 gebildete Filterrohrkanal 18 entsprechend großvolumiger auszuführen.

Wie bereits angedeutet, besteht das Filterrohr 17 der Zusatzdruckluft-Einlassvorrichtung 9 aus mikroporösem Material derart, dass es für Luft, jedoch nicht für Beschichtungspulver durchlässig ist. Das Filterrohr 17 besteht vorzugsweise aus einem Sinterkörper, beispielsweise aus Metall oder Kunststoff, oder aus einer Metall oder Kunststoff enthaltenden Materialmischung. Ferner kann es aus einem Material bestehen und/oder durch eine Filtermembran gebildet sein.

Durch die relative große Oberfläche des Filterrohres 17 an seinem Innenumfang kann bereits mit einer geringen Menge an Druckluft die axiale Pulververteilung im Pulverrohrkanal 18 und damit auch im Pulverweg stromabwärts des Pulverauslasses 3 der Pulverdichtstrompumpe 1 homogenisiert werden. Dadurch können Pulsaktionen der Pulverströmung im Pulverweg vermieden oder zumindest reduziert werden. Ferner kann eine Homogenisierung der Pulverdichte in Längsrichtung und über den Querschnitt des Pulverweges erzielt werden.

Gemäß der in Fig. 1 schematisch dargestellten Ausführungsform der erfindungsgemäßen Pulverfördervorrichtung 100 wird die Zusatzdruckluft der Zusatzdruckluft-Einlassvorrichtung 9 pulsierend mit einer Pulsfrequenz zugeführt, welche gleich groß wie die Frequenz der Pulverförderkammer 4 ist, mit welcher die Pulverförderkammer 4 Pulverportionen abgibt. Hierzu ist vorgesehen, dass die beiden Ventile V1 und V5 gegenphasig betrieben werden. Auf diese Weise ist sichergestellt, dass die im Pulverförder-Betriebsmodus der Pulverdichtstrompumpe 1 pro Zeiteinheit in den Pulverweg eingeleitete Menge an Transportdruckluft zeitlich konstant ist. Mit anderen Worten, im Pulverförder-Betriebsmodus wird zu jedem Zeitpunkt stets die gleiche Menge an Transportdruckluft in den Pulverweg eingespeist.

Wie bereits angedeutet, ist das Pulvereinlassventil 7 und das Pulverauslassventil 8 der bei der erfindungsgemäßen Pulverfördervorrichtung 100 zum Einsatz kommenden Pulverdichtstrompumpe 1 jeweils als Quetschventil (engl.: pinch valve) ausgeführt, da sich in Quetschventilen weniger Beschichtungspulver ablagern kann als in anderen Ventilarten, und weil sich Pulverablagerungen durch die Luftströmung in ihnen leicht reinigen lassen. Quetschventile sind mittels Druckluft oder mittels Unterdruck steuerbare Ventile.

Zur Steuerung des Betriebes der Pulverdichtstrompumpe 1 kommt die bereits erwähnte Steuereinrichtung 90 zum Einsatz, welche in Fig. 1 nur schematisch angedeutet ist. Die Steuereinrichtung 90 ist ausgebildet, die einzelnen ansteuerbaren Komponenten der Pulverfördervorrichtung 100, insbesondere die Steuerventile V1, V2, V3, V4 und V5, geeignet anzusteuern und deren Betätigung zu koordinieren.

Gemäß der vorliegenden Erfindung ist die Steuereinrichtung 90 insbesondere ausgebildet, die ansteuerbaren Komponenten der Pulverfördervorrichtung 100 geeignet anzusteuern, um die Pulverdichtstrompumpe wahlweise in einem Pulverförder-Betriebsmodus oder in einem Spül-Betriebsmodus zu betreiben.

Bei der in Fig. 1 schematisch dargestellten Ausführungsform der erfindungsgemäßen Pulverfördervorrichtung 100 ist insbesondere vorgesehen, dass von dem Benutzer der Pulverfördervorrichtung 100 beispielsweise über die Steuereinrichtung 90 zunächst der Betriebsmodus der Pulverdichtstrompumpe 1 ausgewählt wird. Hierbei stehen insbesondere der Pulverförder-Betriebsmodus und der Spül-Betriebsmodus zur Auswahl. Abhängig von dem ausgewählten Betriebsmodus der Pulverdichtstrompumpe 1 werden dann von der Steuereinrichtung 90 die einzelnen ansteuerbaren Komponenten der Pulverfördervorrichtung 100 entsprechend angesteuert. Dies betrifft insbesondere auch die ansteuerbaren Komponenten der Druckregelung 91, um den Betätigungsdruck für die Pulvereinlass- und Pulverauslassventile 7, 8 und den Druckwert des in die Förderkammer 4 einzuleitenden Druckgases und/oder die Menge des pro Zeiteinheit in die Förderkammer einzuleitenden Druckgases einzustellen.

In dem Pulverförder-Betriebsmodus der Pulverdichtstrompumpe 1 wird abwechselnd durch das geöffnete Pulvereinlassventil 7 eine Pulverportion aus dem Pulverreservoir 101 in die Förderkammer 4 der Pulverdichtstrompumpe 1 eingesaugt. Während dieser Saugphase ist das Pulverauslassventil 8 geschlossen. Anschließend wird die zuvor in die Förderkammer 4 der Pulverdichtstrompumpe 1 eingesaugte Pulverportion durch Einleiten von Transport-Druckgas in die Förderkammer 4 durch das geöffnete Pulverauslassventil 8 abgegeben. Während des Pulverausstoßes aus der Förderkammer 4 ist das Pulvereinlassventil 7 geschlossen.

Wird hingegen die Pulverdichtstrompumpe 1 in ihrem Spül-Betriebsmodus betrieben, ist entweder das Pulvereinlassventil 7 oder das Pulverauslassventil 8 geöffnet, während das andere der beiden Ventile 8, 7 geschlossen ist und während gleichzeitig oder zeitlich versetzt Spül-Druckgas, insbesondere Spül-Druckluft, in die Förderkammer 4 der Pulverdichtstrompumpe 1 eingeleitet wird.

Im geöffneten Zustand des Pulvereinlassventil 7 werden im Spül-Betriebsmodus der Pulverdichtstrompumpe 1 insbesondere die Förderkammer 4 der Pulverdichtstrompumpe 1, der Pulverweg zwischen dem Pulvereinlass 5 und dem Pulvereinlass 7, der Ventilkanal des als Quetschventil ausgeführten Pulvereinlassventils 7, der Pulverkanal zwischen dem Pulvereinlassventil 7 und dem Pulvereinlass 2 der Pulverdichtstrompumpe 1 sowie eine an dem Pulvereinlass 2 gegebenenfalls angeschlossene Pulverleitung 103 mit dem in die Förderkammer eingeleiteten Spül-Druckgas durchströmt (durchspült), infolgedessen die Förderkammer 4 der Pulverdichtstrompumpe 1 und deren ansaugseitiger Bereich gereinigt werden.

Wenn hingegen das Pulverauslassventil 8 geöffnet und das Pulvereinlassventil 7 geschlossen ist, werden in dem Spül-Betriebsmodus der Pulverdichtstrompumpe 1 insbesondere die Pulverkammer 4 der Pulverdichtstrompumpe 1, der Pulverweg zwischen dem Pulverauslass 6 der Pulverförderkammer 4 und dem Pulverauslassventil 8, der Ventilkanal des als Quetschventil ausgebildeten Pulverauslassventils 8, der Pulverweg zwischen dem Pulverauslassventil 8 und dem Pulverauslass 3 der Pulverdichtstrompumpe 1 sowie eine gegebenenfalls an dem Pulverauslass 3 der Pulverdichtstrompumpe 1 angeschlossene Pulverleitung 104 von dem in die Förderkammer 4 eingeleiteten Spül-Druckgas durchspült, so dass die Förderkammer der Pulverdichtstrompumpe 1 und deren ausstoßseitiger Bereich gereinigt werden.

Der Spül-Betriebsmodus ist im Hinblick auf die Reinigungswirkung am effizientesten, wenn als Spül-Druckgas Druckluft mit einem relativ hohen Druckniveau (beispielsweise bis zu 6 bar) verwendet wird. Hingegen genügt es in der Regel im Förderbetrieb der Pulverdichtstrompumpe 1, d.h. im Pulverförder-Betriebsmodus dieser, in die Förderkammer 4 der Pulverdichtstrompumpe 1 Transport-Druckgas mit einem relativ geringen Druckniveau (beispielsweise 1 bis 3 bar) einzuleiten.

Damit im Spül-Betriebsmodus die Ansaugseite der Pulverdichtstrompumpe 1 bzw. die Ausstoßseite der Pulverdichtstrompumpe 1 effizient gereinigt werden kann, ist dafür Sorge zu tragen, dass das Spül-Druckgas, welches in die Förderkammer 4 der Pulverdichtstrompumpe 1 eingeleitet wird, ohne Verluste den ansaugseitigen Bereich bzw. den ausstoßseitigen Bereich der Pulverdichtstrompumpe 1 durchströmt. Mit anderen Worten, ein effizientes Reinigen der Förderkammer 4 zusammen mit dem ansaugseitigen Bereich der Pulverdichtstrompumpe 1 bzw. ein effizientes Reinigen der Förderkammer 4 der Pulverdichtstrompumpe 1 zusammen mit dem ausstoßseitigen Bereich ist dann gegeben, wenn das Pulverauslassventil 8 bzw. das Pulvereinlassventil 7 gasdicht verschlossen sind.

Um dies sicherzustellen und um insbesondere zu verhindern, dass das in die Förderkammer 4 eingeleitete und unter hohem Druck stehende Spül-Druckgas durch das geschlossene Pulvereinlassventil 7 bzw. Pulverauslassventil 8 dringen kann, ist gemäß der Erfindung der Druckwert des zum Verschließen des Pulvereinlassventils 7 und/oder Pulverauslassventils 8 gewählten Betätigungsdruckes im Spül-Betriebsmodus der Pulverdichtstrompumpe 1 höher als der Druckwert des Betätigungsdruckes des Pulvereinlass-und Pulverauslassventils 7, 8 im Pulverförder-Betriebsmodus der Pulverdichtstrompumpe 1.

Zu diesem Zweck ist bei der erfindungsgemäßen Pulverfördervorrichtung 100 die bereits erwähnte Druckregulierung bzw. Druckregelung 91 vorgesehen, welche ein Steuerventil V7, insbesondere Magnetventil, aufweist, wobei dieses Steuerventil V7 zwischen der Druckluftversorgung 58 und dem Druckspeicher 57 strömungsmäßig angeschlossen ist. Ferner weist die Druckregelung 91 einen Drucksensor S1 auf, mit welchem das Druckniveau der in dem Druckspeicher 57 zwischengelagerten Betätigungsdruckluft für die Quetschventile 7, 8 vorzugsweise kontinuierlich oder zu vorgegebenen Zeiten und/oder Ereignissen erfasst wird. Im Pulverförder-Betriebsmodus der Pulverdichtstrompumpe 1 wird über das Ventil V7 der Druckwert der in dem Druckspeicher 57 zwischengespeicherten Betätigungsdruckluft derart eingestellt, dass dieser auf einem ersten Druckniveau von beispielsweise 1 bis 3 bar liegt. Dieser Betätigungsdruck genügt, um das als Quetschventil ausgebildete Pulvereinlassventil 7 bzw. das als Quetschventil ausgebildete Pulverauslassventil 8 im Pulverförder-Betriebsmodus gasdicht verschließen zu können.

Im Spül-Betriebsmodus der Pulverdichtstrompumpe 1 hingegen ist das Druckniveau der in dem Druckspeicher 57 zwischengespeicherten Betätigungsdruckluft entsprechend anzuheben, da - wie bereits ausgeführt - im Spül-Betriebsmodus der Pulverdichtstrompumpe 1 das Pulvereinlassventil 7 bzw. das Pulverauslassventil 8 gegenüber höheren Drücken gasdicht verschließbar sein muss. Von daher wird im Spül-Betriebsmodus über das Ventil V7 der Druckspeicher 57 so lange mit der Druckluftversorgung 58 strömungsmäßig verbunden, bis über den Drucksensor S1 erfasst wird, dass der Druckwert der in dem Druckspeicher 57 zwischengespeicherten Betätigungsdruckluft für die Quetschventile 7, 8 auf einem entsprechend höheren (zweiten) Druckniveau liegt, welcher beispielsweise in einem Bereich zwischen 2 bis 6 bar liegt.

Wie bereits dargelegt, ist es selbstverständlich aber auch denkbar, dass die jeweils als Quetschventil ausgebildeten Pulvereinlass- und Pulverauslassventile 7, 8 direkt, d.h. ohne Zwischenschaltung des Druckspeichers 57, über das Ventil V7 mit der Druckluftversorgung 58 verbindbar sind. In diesem Fall müsste das Ventil V7 die Druckregulierung übernehmen. Dies ist beispielsweise dadurch realisierbar, dass das Ventil V7 als Druckregelventil ausgebildet ist.

Die Steuereinrichtung 90 passt über die Druckregelung 91 nicht nur den Druckwert der Betätigungsdruckluft für die als Quetschventil ausgebildeten Ventile 7, 8 in Abhängigkeit von dem Betriebsmodus der Pulverdichtstrompumpe 1 an, sondern auch den Druckwert des in die Förderkammer 4 der Pulverdichtstrompumpe 1 einzuleitenden Druckgases (entweder Transport-Druckgas bzw. Transport-Druckluft oder Spül-Druckgas bzw. Spül-Druckluft).

Im Einzelnen weist die Steuereinrichtung 90 hierzu eine beispielsweise zur Druckregelung 91 gehörende Druckregulierung für das in die Förderkammer 4 der Pulverdichtstrompumpe 1 einzuleitende Druckgas auf. Diese Druckregulierung wird bei der in Fig. 1 schematisch dargestellten Ausführungsform der erfindungsgemäßen Pulverfördervorrichtung 100 dadurch realisiert, dass die Luftaustauschöffnung 13, welche in dem Gehäuse der Pulverförderkammer 4 vorgesehen ist, über die Druckluftleitung 50 und ein als Drosseleinrichtung dienendes Drosselventil V8 und ein Magnetventil V9 mit der Druckluftversorgung 58 strömungsmäßig verbunden oder verbindbar ist. Abhängig von dem für die Pulverdichtstrompumpe 1 gewählten Betriebsmodus (Pulverförder-Betriebsmodus oder Spül-Betriebsmodus) wird mit Hilfe des Drosselventils V8 der von der Druckluftversorgung 58 bereitgestellte Betriebsdruck von beispielsweise 6 bar auf ein anderes Druckniveau reduziert, welches in dem entsprechenden Betriebsmodus der Pulverdichtstrompumpe 1 benötigt wird.

Vorzugsweise ist die Druckregelung 91 ausgelegt, im Pulverförder-Betriebsmodus den Druckwert des an das Pulvereinlassventil 7 und/oder Pulverauslassventil 8 anzulegenden Betätigungsdruckes auf einem Bereich von 1 bis 3 bar einzustellen, und im Spül-Betriebsmodus den Druckwert des an das Pulvereinlassventil 7 und/oder Pulverauslassventil 8 anzulegenden Betätigungsdruckes auf einem Bereich von 2 bis 5 bar einzustellen. Dies wird insbesondere mit Hilfe des Ventils V7 bewirkt.

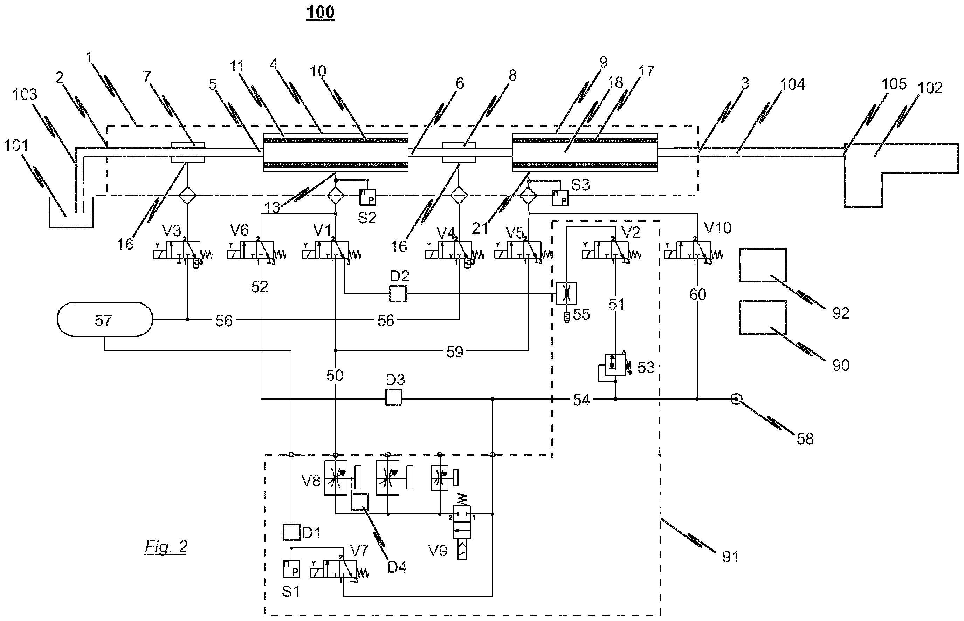

Die in Fig. 2 schematisch dargestellte exemplarische Ausführungsform der erfindungsgemäßen Pulverfördervorrichtung 100 entspricht im Wesentlichen der zuvor unter Bezugnahme auf die Darstellung in Fig. 1 beschriebenen Ausführungsform, wobei hier jedoch noch eine erste Bypass-Druckluftleitung 52 vorgesehen ist, welche einerseits (über die Druckluftleitung 54) mit der Druckluftversorgung bzw. Druckluftversorgung 58 verbunden und andererseits über ein weiteres Ventil V6 (hier: Magnetventil) mit der Luftaustauschöffnung 13 der Pulverdichtstrompumpe 1 verbindbar ist.

Die Bypass-Druckluftleitung 52 dient bei der in Fig. 2 dargestellten Ausführungsform dazu, im Spül-Betriebsmodus der Pulverdichtstrompumpe 1 die Luftaustauschöffnung 13 der Pulverdichtstrompumpe 1 direkt strömungsmäßig mit der Druckluftversorgung 58 zu verbinden, um die von der Druckluftversorgung 58 bereitgestellte Druckluft direkt in die Förderkammer 4 der Pulverdichtstrompumpe 1 einzuleiten.

Des Weiteren ist eine weitere Bypass-Druckluftleitung 60 vorgesehen, welche einerseits mit der Druckluftversorgung bzw. Druckluftversorgung 58 verbunden und andererseits über ein weiteres Ventil V10 (hier: Magnetventil) mit der Luftaustauschöffnung 21 der Zusatzdruckluft-Einlassvorrichtung 9 verbindbar ist. Die weitere Bypass-Druckluftleitung 60 dient bei der in Fig. 2 dargestellten Ausführungsform dazu, im Spül-Betriebsmodus der Pulverdichtstrompumpe 1 die Luftaustauschöffnung 21 der Zusatzdruckluft-Einlassvorrichtung 9 direkt strömungsmäßig mit der Druckluftversorgung 58 zu verbinden, um die von der Druckluftversorgung 58 bereitgestellte Druckluft direkt in die Zusatzdruckluft-Einlassvorrichtung 9 einzuleiten.

Bei der in Fig. 2 schematisch dargestellten alternativen Ausführungsform wird nur im Pulverförder-Betriebsmodus der Pulverdichtstrompumpe 1 über das Drosselventil V8 der Betriebsdruck der von der Druckluftversorgung 58 bereitgestellten Druckluft reduziert.

Wie bereits angedeutet, kommt bei der erfindungsgemäßen Lösung als Drosseleinrichtung der Druckregelung 91 das Drosselventil V8 zum Einsatz. Dieses Drosselventil V8 ist vorzugsweise derart ausgebildet, um bedarfsweise einen Durchflussquerschnitt der mit der Förderkammer 4 der Pulverdichtstrompumpe 1 strömungsmäßig verbundenen oder verbindbaren Druckgasleitung 50 örtlich einzustellen, um auf diese Weise die pro Zeiteinheit der Förderkammer 4 zugeführte Menge an Druckgas und/oder den Druckwert des an die Luftaustauschöffnung 13 anzulegenden Betätigungsdruckes zu variieren bzw. an den jeweiligen Betriebsmodus der Pulverdichtstrompumpe 1 anzupassen.

Gemäß einer bevorzugten Realisierung der bei der erfindungsgemäßen Pulverfördervorrichtung 100 zum Einsatz kommenden Drosseleinrichtung ist das Drosselventil V8 in Gestalt eines Regeventils ausgeführt, wobei das Drosselventil V8 zum Einstellen des Druckwertes des während der Pulverförder-Betriebsmodus in die Förderkammer 4 einzuleitenden Transport-Druckgases und/oder zum Einstellen einer pro Zeiteinheit während des Pulverförder-Betriebsmodus in die Förderkammer 4 einzuleitenden Menge an Transport-Druckgas dient. Hierbei ist es von Vorteil, wenn das mindestens eine Drosselventil V8 ferner ausgebildet ist, zum Einstellen des Druckwertes des während des Spül-Betriebsmodus in die Förderkammer 4 einzuleitenden Spül-Druckgases und/oder zum Einstellen einer pro Zeiteinheit während des Spül-Betriebsmodus in die Förderkammer 4 einzuleitenden Menge an Spül-Druckgas.

In diesem Zusammenhang ist es denkbar, dass das Drosselventil V8 ein ortsfestes Ventil, insbesondere Ventilsitz, und ein relativ dazu bewegliches und dadurch einstellbares Ventilteil, insbesondere Ventilnadel, zur Veränderung der Öffnungsweite eines Drosselkanals des Drosselventils V8 aufweist, wobei die geometrische Form des einstellbaren Ventilteils (Ventilnadel) so gewählt ist, dass das Drosselventil V8 eine Durchflusskennlinie mit mindestens zwei im Wesentlichen linearen Bereichen aufweist. Diese mindestens im Wesentlichen linearen Bereiche der Durchflusskennlinie weisen dabei unterschiedliche Steigungen auf.

Die Steuereinrichtung 90 ist gemäß der vorliegenden Erfindung vorzugsweise derart ausgebildet, im Pulverförder-Betriebsmodus der Pulverdichtstrompumpe 1 das Drosselventil V8 derart anzusteuern, dass der Druckgas-Durchfluss durch das Drosselventil V8 in dem ersten im Wesentlichen linearen Bereich der Durchflusskennlinie liegt, wobei das Drosselventil V8 von der Steuereinrichtung 90 im Spül-Betriebsmodus der Pulverdichtstrompumpe 1 derart angesteuert wird, dass der Druckgas-Durchfluss durch das Drosselventil V8 in dem zweiten im Wesentlichen linearen Bereich der Durchflusskennlinie liegt. Auf diese Weise ist es möglich, mit einem einzigen Ventil (Drosselventil V8) zwei unterschiedliche Druckniveaus für das in die Förderkammer 4 der Pulverdichtstrompumpe 1 einzuleitenden Druckgas zu realisieren, so dass auf das in dem Pneumatikdiagramm gemäß Fig. 2 zum Einsatz kommende Ventil V6, welches beispielsweise als Magnetventil ausgeführt ist verzichtet werden kann.

Vorzugsweise ist das Drosselventil V8 über einen von der Steuereinrichtung 90 ansteuerbaren Stellantrieb, insbesondere elektrischen Stellantrieb ansteuerbar, um den Durchfluss von Druckgas durch das Drosselventil V8 durch ein Verfahren des beweglichen Ventilteils relativ zu dem ortsfesten Ventilteil (Ventilsitz) einzustellen.

Zusammenfassend bleibt festzuhalten, dass die bei den in Fig. 1 und Fig. 2 schematisch dargestellten Pulverfördervorrichtungen 100 zum Einsatz kommende Druckregelung 91 zum Einstellen und Halten eines vorab festgelegten oder festlegbaren Soll-Druckes an der mindestens einen Förderkammer 4 der Pulverdichtstrompumpe 1 und zum Einstellen und Halten eines vorab festgelegten oder festlegbaren Betätigungsdruckes an dem Pulvereinlassventil 7 bzw. dem Pulverauslassventil 8 dient.

Zu diesem Zweck ist bei den in den Zeichnungen dargestellten exemplarischen Ausführungsformen der erfindungsgemäßen Lösung eine Sensoreinrichtung vorgesehen, welche einen ersten Drucksensor S1 und einen zweiten Drucksensor S2 aufweist. Der erste Drucksensor S1 ist den als Quetschventil ausgeführten Pulvereinlass- und Pulverauslassventilen 7, 8 zugeordnet und dient dazu, einen bei Betätigung des Pulvereinlassventils 7 am Pulvereinlassventil 7 einstellenden Druckwert bzw. einen bei Betätigung des Pulverauslassventils 8 am Pulverauslassventil 8 einstellenden Druckwert zu erfassen. Mit dem zweiten Drucksensor S2 wird ein sich in einer Pulver-Ansaugphase der Pulverdichtstrompumpe 1 in der mindestens einen Förderkammer 4 einstellender Unterdruckwert sowie ein sich in einer Pulver-Ausstoßphase oder in einem Spül-Betriebsmodus der Pulverdichtstrompumpe 1 in der mindestens einen Förderkammer 4 einstellender Überdruckwert erfasst.

Im Einzelnen ist bei den in den Zeichnungen exemplarisch dargestellten Ausführungsformen der erfindungsgemäßen Pulverfördervorrichtung 100 der erste Drucksensor S1 am Ausgang der Druckregelung 91 angeordnet und strömungsmäßig mit dem Pulvereinlassventil 7 und dem Pulverauslassventil 8 verbunden bzw. verbindbar.

Der zweite Drucksensor S2 ist bei den exemplarischen Ausführungsformen direkt an der Förderkammer 4 der Pulverdichtstrompumpe 1 angeordnet und dient zum Erfassen eines sich in einer Pulver-Ausstoßphase der Pulverdichtstrompumpe 1 oder in einem Spül-Betriebsmodus der Pulverdichtstrompumpe 1 in der zwischen dem Filter 10 und dem Förderkammergehäuse 12 gebildeten Zwischenkammer 11 einstellenden Druckwertes eines an der Förderkammer 4 angelegten Überdruckes. Durch die Anordnung des zweiten Drucksensors S2 an der Förderkammer 4 der Pulverdichtstrompumpe 1 kann mit diesem Drucksensor S2 auch ein sich in einer Pulver-Ansaugphase der Pulverdichtstrompumpe 1 in der zwischen dem Filter 10 und dem Förderkammergehäuse 12 gebildeten Zwischenkammer 11 einstellender Druckwert eines an der Förderkammer 4 angelegten Unterdruckes erfasst werden.

Andererseits ist es aber auch denkbar, wenn dem Pulvereinlassventil 7 und/oder dem Pulverauslassventil 8 jeweils ein Drucksensor zugeordnet ist. Ferner ist es denkbar, dass der zweite Drucksensor S2 in der Druckgasleitung 50 angeordnet ist.

Darüber hinaus grundsätzlich auch denkbar, dass auch der Zusatzdruckluft-Einlassvorrichtung 9 ein Drucksensor S3 zugeordnet ist, um ein sich bei Einleiten von Zusatzdruckluft in der Druckluftkammer der Zusatzdruckluft-Einlassvorrichtung 9 einstellender Überdruckwert zu erfassen. Hierbei ist zu berücksichtigen, dass anstelle von zwei verschiedenen Drucksensoren S2 und S3 selbstverständlich auch ein einziger Drucksensor vorgesehen sein kann, der beispielsweise am Ausgang des Ventils V8 angeordnet ist.

Die Drucksensoren S1, S2 und S3 bilden eine Sensoreinrichtung, die funktionsmäßig zu der Druckregelung 91 gehört, da im Betrieb der Pulverdichtstrompumpe 1 mit der Sensoreinrichtung erfasst und kontrolliert wird, ob sich die vorab festgelegten Druckwerte bei den entsprechend pneumatisch angesteuerten Komponenten der Pulverdichtstrompumpe 1 tatsächlich einstellen, oder ob die Druckregelung entsprechend regelnd eingreifen muss. Insbesondere wird durch das Vorsehen der Sensoreinrichtung sichergestellt, dass sich im Pulverförder-Betriebsmodus und im Spül-Betriebsmodus der Pulverdichtstrompumpe 1 die entsprechenden, vorab festgelegten oder festlegbaren Soll-Drücke an der mindestens einen Förderkammer 4 der Pulverdichtstrompumpe 1 einstellen. Beispielsweise ist im Pulverförder-Betriebsmodus vorgesehen, dass in einer Pulver-Ausstoßphase in der Förderkammer 4 ein vorab festgelegter Überdruck von 1 bis 3 bar angelegt wird. Im Spül-Betriebsmodus hingegen sollte der sich in der Förderkammer 4 einstellende Druckwert höher sein, beispielsweise 2 bis 5 bar.

Mit dem zur Sensoreinrichtung gehörenden ersten Drucksensor S1 wird ferner sichergestellt, dass bei Betätigung der als Quetschventil ausgeführten Pulvereinlass- und Pulverauslassventile 7, 8 sich dort ein vorab festgelegter Betätigungsdruck von beispielsweise 1 bis 6 bar (abhängig von dem Betriebsmodus der Pulverdichtstrompumpe 1) einstellt.

Die zu der Sensoreinrichtung gehörenden Drucksensoren S1, S2, S3 wirken derart mit der Druckregelung 91 zusammen, dass die von der Sensoreinrichtung erfassten Druckwerte über eine Rückkopplung (nicht dargestellt) als Ist-Werte der Druckregelung 91 zugeführt werden, wobei die Druckregelung 91 die bei den pneumatisch ansteuerbaren Komponenten der Pulverdichtstrompumpe im Betrieb der Pulverdichtstrompumpe einzustellenden und zu haltenden Drücke auf den entsprechend vorab festgelegten oder festlegbaren Wert einregelt. Wie bereits dargelegt, erfolgt dies bei den in den Zeichnungen schematisch dargestellten Ausführungsformen unter anderem durch ein geeignetes Ansteuern des Drosselventils V8 mit dem ein Durchflussquerschnitt und somit die pro Zeiteinheit der Förderkammer 4 zugeführte Menge an Transport-Druckgas entsprechend variiert wird.

Wie in den Zeichnungen dargestellt, ist der Eingang der Druckregelung 91 strömungsmäßig mit der Druckluftquelle bzw. Druckluftversorgung 58 verbunden. Die Druckluftversorgung 58 stellt einen vorab festgelegten oder festlegbaren konstanten Versorgungsdruck bereit und ist beispielsweise als ein Eingangsdruckregler ausgeführt, der einen an einem Versorgungsanschluss anliegenden Eingangsdruck auf einen internen konstanten Versorgungsdruck einregelt.

Demnach ist zumindest bei der exemplarischen Ausführungsform gemäß Fig. 1 die Druckregelung 91 ausgelegt, i) um einen vorab festgelegten oder festlegbaren Druckwert eines während einer Pulver-Ausstoßphase der Förderkammer 4 zuzuführenden Transport-Druckgases einzustellen, ii) um einen vorab festgelegten oder festlegbaren Druckwert eines im Spül-Betriebsmodus der Pulverdichtstrompumpe 1 der Förderkammer 4 zuzuführenden Spül-Druckgases einzustellen, und iii) um einen vorab festgelegten oder festlegbaren Druckwert eines zum Betätigen des Pulvereinlassventils 7 und/oder des Pulverauslassventils 8 an dem entsprechenden Ventil anzulegenden Betätigungsdruckes einzustellen.

In diesem Zusammenhang ist anzumerken, dass die Druckregelung 91 auch ausgebildet ist, um einen vorab festgelegten oder festlegbaren Druckwert eines während einer Pulver-Ansaugphase in der Förderkammer 4 anzulegenden Unterdruckes einzustellen. Zu diesem Zweck wird der zu der Vakuumquelle gehörende Druckregler 53 und/oder das Steuerventil V2 vorzugsweise mit Hilfe der Steuereinrichtung 90 entsprechend angesteuert.

Bei den exemplarischen Ausführungsformen gemäß Fig. 1 und Fig. 2 wird im Pulverförder-Betriebsmodus der Pulverdichtstrompumpe 1 während einer Pulver-Ausstoßphase nicht nur sichergestellt, dass sich in der Förderkammer 4 der Pulverdichtstrompumpe 1 ein vorab festgelegter Überdruck einstellt, sondern auch die pro Zeiteinheit der Förderkammer 4 zugeführte Transport-Druckgasmenge erfasst bzw. ermittelt. In gleicher Weise wird im Spül-Betriebsmodus der Pulverdichtstrompumpe 1 mit der Druckregelung 91 sichergestellt, dass sich in der Förderkammer 4 der Pulverdichtstrompumpe 1 ein vorab festgelegter Überdruck einstellt; darüber hinaus wird auch die pro Zeiteinheit der Förderkammer 4 zugeführte Spülgasmenge erfasst bzw. ermittelt.

Zu diesem Zweck ist eine Gasmengenstrom-Erfassungseinrichtung vorgesehen. Die Gasmengenstrom-Erfassungseinrichtung ist ausgelegt, den Wert der beim Einstellen und Halten eines bestimmten, vorab festgelegten Druckes (Über- oder Unterdruck) in der Förderkammer 4 pro Zeiteinheit zu- oder abgeführten Gasmenge und/oder den Wert der beim Einstellen und Halten des Betätigungsdruckes an dem Pulvereinlassventil 7 bzw. dem Pulverauslassventil 8 pro Zeiteinheit zuzuführenden Gasmenge zu erfassen bzw. zu ermitteln.

Bei den in den Zeichnungen gezeigten, exemplarischen Ausführungsformen wird der Gasmengenstrom auf unterschiedliche Weise erfasst: zum einen können Durchflusssensoren D1, D2, D3 zum Einsatz kommen. So dient beispielsweise bei den in Fig. 1 und Fig. 2 dargestellten Ausführungsformen der erfindungsgemäßen Pulverfördervorrichtung 100 der Durchflusssensor D1 dazu, den Wert der beim Einstellen und Halten des Betätigungsdruckes an dem Pulvereinlassventil 7 bzw. dem Pulverauslassventil 8 pro Zeiteinheit zuzuführenden Gasmenge zu erfassen bzw. zu ermitteln, während der Durchflusssensor D2 vorgesehen ist, um während einer Pulver-Ansaugphase der Pulverdichtstrompumpe 1 die pro Zeiteinheit aus der Förderkammer 4 abzusaugenden Gasmenge zu erfassen bzw. zu ermitteln.

Darüber hinaus ist bei der in Fig. 2 dargestellten Ausführungsform ein Durchflusssensor D3 in der Bypass-Leitung 52 vorgesehen, um im Spül-Betriebsmodus der Pulverdichtstrompumpe 1 die der Förderkammer 4 pro Zeiteinheit zugeführte Menge an Spül-Druckgas zu erfassen.

Die während einer Pulver-Ausstoßphase der Förderkammer 4 pro Zeiteinheit zugeführte Menge an Transport-Druckgas wird bei den Ausführungsformen gemäß Fig. 1 und Fig. 2 auf Grundlage eines von der Druckregelung eingestellten Durchflussquerschnittes der Drosseleinrichtung (Drosselventil V8) erfasst. Hierzu ist ein Stellgrößensensor D4 vorgesehen, mit welchem die Stellgröße der Drosseleinrichtung (Drosselventil V8) erfasst wird. Anhand der erfassten Stellgröße lässt sich über eine entsprechende Ventilkennlinie der Gasmengenstrom bestimmen. Alternativ hierzu ist es aber auch denkbar, dass kein quantitativer Wert des Gasmengenstroms erfasst wird. Beispielsweise kann die erfasste Stellgröße der Drosseleinrichtung direkt als qualitativer Wert des Gasmengenstroms herangezogen werden.

Bei der in Fig. 1 dargestellten Ausführungsform wird auch die im Spül-Betriebsmodus der Förderkammer 4 pro Zeiteinheit zugeführte Menge an Spül-Druckgas indirekt über den Stellgrößensensor D4 erfasst bzw. ermittelt; d.h. auf Grundlage eines von der Druckregelung eingestellten Durchflussquerschnittes der Drosseleinrichtung (Drosselventil V8).

Eine in Fig. 1 und Fig. 2 nur schematisch dargestellte eine Auswerteeinrichtung 92 dient bei der erfindungsgemäßen Pulverfördervorrichtung 100 zum Auswerten der mit der Gasmengenstrom-Erfassungseinrichtung erfassten bzw. ermittelten Gasmengenströme. Im Einzelnen ist die Auswerteeinrichtung 92 ausgelegt ist, mindestens einen mit der Gasmengenstrom-Erfassungseinrichtung erfassten bzw. ermittelten Gasmengenstromwert mit einem entsprechenden Soll-Wert zu vergleichen, wobei die Auswerteeinrichtung 92 ferner ausgelegt ist, bei Abweichung des mindestens einen erfassten Gasmengenstromwertes von dem entsprechenden Soll-Wert vorzugsweise in Abhängigkeit von der Größe der Abweichung automatisch eine Fehler- und/oder Alarmmeldung auszugeben.

Besonders bevorzugt ist die Auswerteeinrichtung 92 ausgelegt, automatisch auf eine Undichtigkeit in dem Pulvereinlassventil 7 bzw. in dem Pulverauslassventil 8 oder auf eine Fehlfunktion des Pulvereinlassventils 7 bzw. Pulverauslassventils 8 rückzuschließen und eine entsprechende Fehler- und/oder Alarmmeldung auszugeben, wenn von der Gasmengenstrom-Erfassungseinrichtung erfasst wird, dass die pro Zeiteinheit dem Pulvereinlass- bzw. Pulverauslassventil 7, 8 zuzuführende Menge an Betätigungsdruckgas, die erforderlich ist, um den vorab festgelegten oder festlegbaren Betätigungsdruck an dem Pulvereinlass- bzw. Pulverauslassventil 7, 8 anzulegen und zu halten, größer ist als ein vorab festgelegter oder festlegbarer Gasmengenstrom zuzüglich einer ggf. vorgesehenen Toleranz.

Alternativ oder zusätzlich hierzu ist die Auswerteeinrichtung 92 ausgelegt, automatisch auf eine Verstopfung, Alterung oder Fehlfunktion des der Förderkammer 4 zugeordneten Filters 10 rückzuschließen und eine entsprechende Fehler- und/oder Alarmmeldung auszugeben, wenn von der Gasmengenstrom-Erfassungseinrichtung in mindestens einer Pulver-Ausstoßphase oder im Spül-Betriebsmodus der Pulverdichtstrompumpe 1 erfasst oder andersartig ermittelt wird, dass die pro Zeiteinheit der Förderkammer 4 zuzuführende Menge an Druckgas, die erforderlich ist, um den vorab festgelegten oder festlegbaren Soll-Druck in der Förderkammer 4 einzustellen und zu halten, abweicht von einem vorab festgelegten oder festlegbaren Gasmengenstrom zuzüglich einer ggf. vorgesehenen Toleranz.

Ferner ist bei den in Fig. 1 und Fig. 2 dargestellten Ausführungsformen die Auswerteeinrichtung 92 ausgelegt, automatisch auf eine Verstopfung des der Förderkammer 4 zugeordneten Filters 10 rückzuschließen und eine entsprechende Fehler- und/oder Alarmmeldung auszugeben, wenn von der Gasmengenstrom-Erfassungseinrichtung (Durchflusssensor D2) in mindestens einer Pulver-Ansaugphase der Pulverdichtstrompumpe 1 erfasst wird, dass die pro Zeiteinheit der Förderkammer 4 abgeführte Menge an Druckgas, die erforderlich ist, um den vorab festgelegten oder festlegbaren Unterdruck in der Förderkammer 4 einzustellen und zu halten, abweicht von einem vorab festgelegten oder festlegbaren Gasmengenstrom zuzüglich einer ggf. vorgesehenen Toleranz.

Wie bereits dargelegt, wird in den in Fig. 1 und in Fig. 2 schematisch dargestellten Ausführungsformen der erfindungsgemäßen Pulverfördervorrichtung 100 die Zusatzdruckluft der Zusatzdruckluft-Einlassvorrichtung 9 pulsierend mit einer Pulsfrequenz zugeführt, welche gleich groß wie die Frequenz der Pulverförderkammer 4 ist, mit welcher die Pulverförderkammer 4 Pulverportionen abgibt. Hierzu ist vorgesehen, dass die beiden Ventile V1 und V5 gegenphasig betrieben werden.

Demnach ist es von Vorteil, wenn die im Pulverförder-Betriebsmodus pro Zeiteinheit der Förderkammer 4 zugeführte Transport-Druckgasmenge und/oder die pro Zeiteinheit der Zusatzdruckluft-Einlassvorrichtung 9 zugeführte Zusatzdruckluftmenge mit einem Sollwert verglichen werden, um eine Aussage über den Zustand des entsprechenden Filterelements 10, 17 treffen zu können.

Andererseits ist es aber auch denkbar, dass die im Pulverförder-Betriebsmodus pro Zeiteinheit der Förderkammer 4 zugeführte Transport-Druckgasmenge mit der pro Zeiteinheit der Zusatzdruckluft-Einlassvorrichtung 9 zugeführten Zusatzdruckluftmenge verglichen wird, um eine Aussage über den Zustand des entsprechenden Filterelements 10, 17 zu treffen. Unter der Voraussetzung, dass das der Förderkammer 4 zugeordnete Filterelement 10 sowie das der Zusatzdruckluft-Einlassvorrichtung 9 zugeordnete Filterelement 17 den gleichen Druckwiderstand aufweisen (was beispielsweise dadurch erzielbar ist, indem beide Filterelemente baugleich ausgeführt werden), müsste die pro Zeiteinheit der Förderkammer 4 zugeführte Transport-Druckgasmenge identisch sein mit der pro Zeiteinheit der Zusatzdruckluft-Einlassvorrichtung 9 zugeführten Zusatzdruckluftmenge. Eine Abweichung voneinander ist ein Indiz für eine Verstopfung eines der beiden Filterelemente 10, 17. Wenn beispielsweise erfasst wird, dass die pro Zeiteinheit der Förderkammer 4 zugeführte Transport-Druckgasmenge geringer ist als die pro Zeiteinheit der Zusatzdruckluft-Einlassvorrichtung 9 zugeführte Zusatzdruckluftmenge, kann auf eine (zumindest teilweise) Verstopfung des Filterelements 10 rückgeschlossen werden.

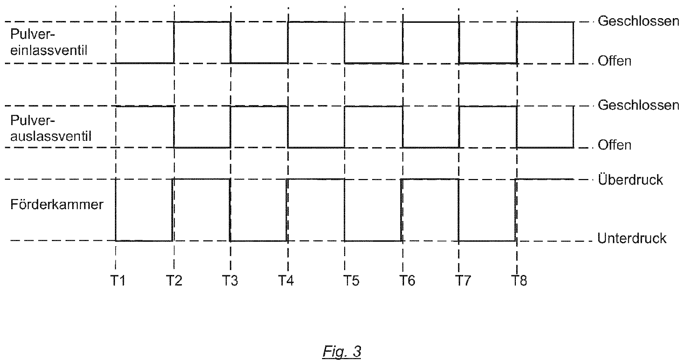

In Fig. 3 ist ein beispielhaftes Pneumatik-Schaltdiagramm für den Betrieb der Pulverdichtstrompumpe 1 im Pulver-Fördermodus gezeigt. Zum Zeitpunkt T1 ist das dem Pulvereinlassventil 7 zugeordnete Magnetventil V3 geschlossen, so dass keine Betätigungsdruckluft dem Pulvereinlassventil 7 zugeführt wird und dieses in seinem geöffneten Zustand vorliegt.

Andererseits ist zum Zeitpunkt T1 das dem Pulverauslassventil 8 zugeordnete Magnetventil V4 geöffnet und es wird somit Betätigungs-Druckgas insbesondere Betätigungsdruckluft über den Druckluftspeicher 57 oder der Druckregelung 91 dem Pulverauslassventil 8 zugeführt, so dass dieses in seinem geschlossenen Zustand vorliegt.

Ebenfalls zum Zeitpunkt T1 ist das der Förderkammer 4 der Pulverdichtstrompumpe 1 zugeordnete Magnetventil V1 derart angesteuert, dass die Luftaustauschöffnung 13 der Förderkammer 4 strömungsmäßig mit der Vakuumquelle 52 verbunden ist. Auf diese Weise wird in der Förderkammer 4 ein Unterdruck angelegt, so dass eine Pulverportion aus dem ersten Pulverreservoir 101 und das geöffnete Pulvereinlassventil 7 in die Förderkammer 4 eingesaugt werden kann.

Im Zeitpunkt T2 findet ein Wechsel von der Pulver-Ansaugphase zu der Pulver-Ausstoßphase statt. Zu diesem Zweck wird das dem Pulvereinlassventil 7 zugeordnete Magnetventil V3 geöffnet, um die Luftaustauschöffnung 16 des Pulvereinlassventils 7 strömungsmäßig mit der Druckluftversorgungsleitung 56 zu verbinden und in der Zwischenkammer des Pulvereinlassventils 7 einen Betätigungsdruck anzulegen, infolge essen das Pulvereinlassventil 7 geschlossen wird.

Andererseits wird zum Zeitpunkt T2 das dem Pulverauslassventil 8 zugeordnete Magnetventil V4 geschlossen, so dass über die Luftaustauschöffnung 16 des Pulverauslassventils 8 keine Betätigungs-Druckluft mehr in die Zwischenkammer des Pulverauslassventils 8 strömen kann. Durch Entlüftung der Zwischenkammer nimmt der Druck in der Zwischenkammer den Atmosphärendruck an und das Pulverauslassventil 8 geht in seinen geöffneten Zustand über.

Das Ausstoßen einer zuvor in die Förderkammer 4 eingesaugten Pulverportion aus der Förderkammer 4 erfolgt, indem zum Zeitpunkt T2 das der Förderkammer 4 zugeordnete Magnetventil V1 so geschaltet wird, dass die Luftaustauschöffnung 13 der Förderkammer 4 strömungsmäßig mit der Druckluftversorgungsleitung 50 verbunden wird. Als Folge hiervon wird der Förderkammer 4 Transport-Druckluft zugeführt.

Zum Zeitpunkt T3 geht die Pulverdichtstrompumpe 1 wieder in die Pulver-Ansaugphase über.

Die Erfindung ist nicht auf die in den Zeichnungen exemplarisch dargestellten Ausführungsformen beschränkt, sondern ergibt sich aus einer Zusammenschau sämtlicher hierin offenbarter Merkmale.

Insbesondere ist es denkbar, dass bei den in Fig. 1 und Fig. 2 dargestellten Ausführungsformen nicht nur ein der Förderkammer 4 zugeführter Gasmengenstrom erfasst bzw. ermittelt wird, sondern auch ein im Betrieb der Pulverdichtstrompumpe 1 der Zusatzdruckluft-Einlassvorrichtung 9 zugeführter Gasmengenstrom ermittelt wird. Zeigt dabei ein in der Auswerteeinrichtung 92 durchgeführter Vergleich des ermittelten Ist-Wertes des der Zusatzdruckluft-Einlassvorrichtung 9 zugeführten Gasmengenstroms mit einem entsprechend festgelegten Soll-Wert, dass der Ist-Wert von dem Soll-Wert abweicht, kann auf eine Verstopfung des Filterrohres 17 der Zusatzdruckluft-Einlassvorrichtung 9 rückgeschlossen werden.

## Patentansprüche

1. Pulverfördervorrichtung (100), insbesondere für Beschichtungspulver, wobei die Pulverfördervorrichtung (100) folgendes aufweist:
- eine pneumatisch betätigte Pulverdichtstrompumpe (1), welche mindestens eine Förderkammer (4) mit einem Pulvereinlassventil (7) und einem Pulverauslassventil (8) aufweist, wobei das Pulvereinlassventil (7) und das Pulverauslassventil (8) jeweils als ein pneumatisch betätigbares und bei Anlegen eines Betätigungsdruckes verschließbares Quetschventil ausgeführt sind;
- eine Druckregelung (91) zum Einstellen und Halten eines vorab festgelegten oder festlegbaren Soll-Druckes an der mindestens einen Förderkammer (4) der Pulverdichtstrompumpe (1) und/oder zum Einstellen und Halten eines vorab festgelegten oder festlegbaren Betätigungsdruckes an dem Pulvereinlassventil (7) bzw. dem Pulverauslassventil (8);
- eine Gasmengenstrom-Erfassungseinrichtung (D1, D2, D3, D4) zum Erfassen bzw. Ermitteln einer beim Einstellen und Halten des Soll-Druckes an der mindestens einen Förderkammer (4) pro Zeiteinheit zu- oder abgeführten Gasmenge und/oder zum Erfassen einer beim Einstellen und Halten des Betätigungsdruckes dem Pulvereinlassventil (7) bzw. dem Pulverauslassventil (8) pro Zeiteinheit zugeführten Gasmenge; und
- eine Auswerteeinrichtung (92), welche ausgelegt ist, mindestens einen erfassten bzw. ermittelten Gasmengenstromwert mit einem entsprechenden Soll-Wert zu vergleichen,
wobei die Auswerteeinrichtung (92) ferner ausgelegt ist, bei Abweichung des mindestens einen erfassten Gasmengenstromwertes von dem entsprechenden Soll-Wert vorzugsweise in Abhängigkeit von der Größe der Abweichung automatisch eine Fehler- und/oder Alarmmeldung auszugeben,
**dadurch gekennzeichnet, dass**
eine Sensoreinrichtung (S1, S2) vorgesehen ist zum Erfassen mindestens eines sich bei Betätigung des Pulvereinlassventils (7) am Pulvereinlassventil (7) einstellenden Druckwertes, und/oder zum Erfassen mindestens eines sich bei Betätigung des Pulverauslassventils (8) am Pulverauslassventil (8) einstellenden Druckwertes, und/oder zum Erfassen mindestens eines sich in einer Pulver-Ansaugphase der Pulverdichtstrompumpe (1) in der mindestens einen Förderkammer (4) einstellenden Unterdruckwertes, und/oder zum Erfassen mindestens eines sich in einer Pulver-Ausstoßphase oder in einem Spül-Betriebsmodus der Pulverdichtstrompumpe (1) in der mindestens einen Förderkammer (4) einstellenden Überdruckwertes.

2. Pulverfördervorrichtung (100) nach Anspruch 1,
wobei die Druckregelung (91) einen Eingang und mindestens einen Ausgang aufweist, wobei der Eingang der Druckregelung (91) strömungsmäßig mit einer Druckluftversorgung (58) verbunden oder verbindbar ist, welche einen vorab festgelegten oder festlegbaren konstanten Versorgungsdruck bereitstellt, und wobei die Druckregelung mindestens eine Drosseleinrichtung aufweist zum örtlichen Einstellen eines Durchflussquerschnittes derart, dass an dem mindestens einen Ausgang der Druckregelung (91) der an der mindestens einen Förderkammer (4) anzulegende Soll-Druck und/oder der an dem Pulvereinlassventil (7) bzw. dem Pulverauslassventil (8) anzulegende Betätigungsdruck bereitgestellt wird.

3. Pulverfördervorrichtung (100) nach Anspruch 1 und 2,
wobei die Druckregelung ausgelegt ist, in Abhängigkeit von dem mindestens einen von der Sensoreinrichtung (S1, S2) erfassten Druckwert den Durchflussquerschnitt der mindestens einen Drosseleinrichtung derart einzustellen, dass der mindestens eine von der Sensoreinrichtung (S1, S2) erfasste Druckwert dem an der mindestens einen Förderkammer (4) anzulegenden Soll-Druck bzw. dem an dem Pulvereinlass-/ Pulverauslassventil (7, 8) anzulegenden Betätigungsdruck entspricht.

4. Pulverfördervorrichtung (100) nach Anspruch 2 oder 3,
wobei die Gasmengenstrom-Erfassungseinrichtung (D1, D2, D3, D4) ausgelegt ist, den Wert der beim Einstellen und Halten des Soll-Druckes in der mindestens einen Förderkammer (4) pro Zeiteinheit zu- oder abgeführten Gasmenge und/oder den Wert der beim Einstellen und Halten des Betätigungsdruckes an dem Pulvereinlassventil (7) bzw. dem Pulverauslassventil (8) pro Zeiteinheit zuführten Gasmenge auf Grundlage eines von der Druckregelung eingestellten Durchflussquerschnittes der mindestens einen Drosseleinrichtung zu erfassen.

5. Pulverfördervorrichtung (100) nach einem der Ansprüche 1 bis 4,
wobei die Druckregelung (91) ausgelegt ist zum Bereitstellen eines Unterdruckes während einer Pulver-Ansaugphase der Pulverdichtstrompumpe (1) und/oder zum Bereitstellen eines Überdruckes während einer Pulver-Ausstoßphase der Pulverdichtstrompumpe (1) und/oder zum Bereitstellen eines Betätigungsdruckes zum Betätigen des Pulvereinlassventils (7) und/oder zum Bereitstellen eines Betätigungsdruckes zum Betätigen des Pulverauslassventils (8); und/oder
wobei die Gasmengenstrom-Erfassungseinrichtung (D1, D2, D3, D4) ausgelegt ist, im Betrieb der Pulverdichtstrompumpe (1) zumindest zeitweise mindestens einen der folgenden zeitlichen Verläufe zu erfassen und mit einem entsprechend vorgegebenen zeitlichen Verlauf zu vergleichen:
- den zeitlichen Verlauf einer bei Betätigung des Pulvereinlassventils (7) pro Zeiteinheit dem Pulvereinlassventil (7) zugeführten Menge an Betätigungsdruckgas;
- den zeitlichen Verlauf einer bei Betätigung des Pulverauslassventils (8) pro Zeiteinheit dem Pulverauslassventil (8) zugeführten Menge an Betätigungsdruckgas;
- den zeitlichen Verlauf einer in Pulver-Ansaugphasen der Pulverdichtstrompumpe (1) pro Zeiteinheit von der mindestens einen Förderkammer (4) abgeführten Menge an Gas; und
- den zeitlichen Verlauf einer in Pulver-Ausstoßphasen der Pulverdichtstrompumpe (1) pro Zeiteinheit der mindestens einen Förderkammer (4) zugeführten Menge an Transportdruckgas,
wobei die Auswerteeinrichtung (92) insbesondere ausgelegt ist, bei einer Abweichung von mindestens einem erfassten Zeitverlauf von dem entsprechend vorgegebenen Zeitverlauf vorzugsweise in Abhängigkeit von der Größe und/oder dem zeitlichen Gradienten einer Differenz zwischen dem vorgegebenen Zeitverlauf und dem erfassten Zeitverlauf automatisch eine Fehler- und/oder Alarmmeldung auszugeben.

6. Pulverfördervorrichtung (100) nach einem der Ansprüche 1 bis 5, wobei das Pulvereinlassventil (7) und/oder das Pulverauslassventil (8) als Quetschventil ausgeführt sind/ist, und zwar von der Art, bei welcher ein flexibler Schlauch einen Ventilkanal auf der Schlauchinnenseite von einer dem Quetschventil zugeordneten Druckkammer auf der Schlauchaußenseite trennt, wobei der Schlauch durch den Betätigungsdruck von in die Druckkammer eingeleitetem Betätigungs-Druckgas zusammenquetschbar und dadurch der Ventilkanal schließbar ist; und/oder wobei die Auswerteeinrichtung (92) ausgelegt ist, automatisch auf eine Undichtigkeit in dem Pulvereinlassventil (7) bzw. in dem Pulverauslassventil (8) oder auf eine Fehlfunktion des Pulvereinlassventils (7) bzw. Pulverauslassventils (8) rückzuschließen und eine entsprechende Fehler- und/oder Alarmmeldung auszugeben, wenn von der Gasmengenstrom-Erfassungseinrichtung (D1, D2, D3, D4) erfasst wird, dass die pro Zeiteinheit dem Pulvereinlass- bzw. Pulverauslassventil (7, 8) zugeführte Menge an Betätigungsdruckgas, die erforderlich ist, um den vorab festgelegten oder festlegbaren Betätigungsdruck an dem Pulvereinlass- bzw. Pulverauslassventil (7, 8) anzulegen, größer ist als ein vorab festgelegter oder festlegbarer Gasmengenstrom zuzüglich einer ggf. vorgesehenen Toleranz.

7. Pulverfördervorrichtung (100) nach einem der Ansprüche 1 bis 6, wobei die Förderkammer (4) eine Kammerwand aufweist, welche mindestens auf einem Teil ihrer Länge zwischen einem Pulvereinlass (5) und einem Pulverauslass (6) der Förderkammer (4) durch einen Filter (10) gebildet ist, wobei der Filter (10) die Förderkammer (4) umgibt und die Förderkammer (4) von einer Zwischenkammer (11) trennt, welche den Filter (10) umgibt, und welche zwischen dem Filter (10) und einem Förderkammergehäuse (12) gebildet ist, wobei der Filter (10) für Gas, aber nicht für Beschichtungspulver durchlässig ist.

8. Pulverfördervorrichtung (100) nach Anspruch 7,
wobei die Sensoreinrichtung (S1, S2) mindestens einen der Förderkammer (4) zugeordneten Drucksensor (S2) aufweist zum Erfassen eines sich in einer Pulver-Ausstoßphase der Pulverdichtstrompumpe (1) oder in einem Spül-Betriebsmodus der Pulverdichtstrompumpe (1) in der zwischen dem Filter (10) und dem Förderkammergehäuse (12) gebildeten Zwischenkammer (11) einstellenden Druckwertes eines an der Förderkammer (4) angelegten Überdruckes; und/oder
wobei die Sensoreinrichtung (S1, S2) mindestens einen der Förderkammer (4) zugeordneten Drucksensor (S2) aufweist zum Erfassen eines sich in einer Pulver-Ansaugphase der Pulverdichtstrompumpe (1) in der zwischen dem Filter (10) und dem Förderkammergehäuse (12) gebildeten Zwischenkammer (11) einstellenden Druckwertes eines an der Förderkammer (4) angelegten Unterdruckes.

9. Pulverfördervorrichtung (100) nach einem der Ansprüche 1 bis 8,
wobei die Auswerteeinrichtung (92) ausgelegt ist, automatisch auf eine Verstopfung, Alterung oder Fehlfunktion eines der Förderkammer (4) zugeordneten Filterelements oder Filters (10) rückzuschließen und eine entsprechende Fehler- und/oder Alarmmeldung auszugeben, wenn von der Gasmengenstrom-Erfassungseinrichtung (D1, D2, D3, D4) in mindestens einer Pulver-Ausstoßphase oder im Spül-Betriebsmodus der Pulverdichtstrompumpe (1) erfasst wird, dass die pro Zeiteinheit der Förderkammer (4) zugeführte Menge an Druckgas, die erforderlich ist, um den vorab festgelegten oder festlegbaren Soll-Druck in der Förderkammer (4) einzustellen und zu halten, abweicht von einem vorab festgelegten oder festlegbaren Gasmengenstrom zuzüglich einer ggf. vorgesehenen Toleranz; und/oder
wobei die die Auswerteeinrichtung (92) ausgelegt ist, automatisch auf eine Verstopfung eines der Förderkammer (4) zugeordneten Filterelements oder Filters (10) rückzuschließen und eine entsprechende Fehler- und/oder Alarmmeldung auszugeben, wenn von der Gasmengenstrom-Erfassungseinrichtung (D1, D2, D3, D4) in mindestens einer Pulver-Ansaugphase der Pulverdichtstrompumpe (1) erfasst wird, dass die pro Zeiteinheit der Förderkammer (4) abgeführte Menge an Druckgas, die erforderlich ist, um einen vorab festgelegten oder festlegbaren Unterdruck in der Förderkammer (4) einzustellen und zu halten, abweicht von einem vorab festgelegten oder festlegbaren Gasmengenstrom zuzüglich einer ggf. vorgesehenen Toleranz; und/oder
wobei in einem Pulverförder-Betriebsmodus der Pulverdichtstrompumpe (1) fortlaufend abwechselnd eine Pulver-Ansaugphase und eine Pulver-Ausstoßphase durchgeführt werden, wobei während der Pulver-Ansaugphase durch das geöffnete Pulvereinlassventil (7) eine Pulverportion in die Förderkammer (4) eingesaugt wird, während das Pulverauslassventil (8) geschlossen ist, und wobei während der Pulver-Ausstoßphase durch das geöffnete Pulverauslassventil (8) die zuvor in die Förderkammer (4) eingesaugte Pulverportion durch Einleiten von Transport-Druckgas in die Förderkammer (4) aus das geöffnete Pulverauslassventil (8) ausgestoßen wird, während das Pulvereinlassventil (7) geschlossen ist.

10. Pulverfördervorrichtung (100) nach einem der Ansprüche 1 bis 9,
wobei in einem Spül-Betriebsmodus der Pulverdichtstrompumpe (1) das Pulvereinlassventil (7) und/oder das Pulverauslassventil (8) geöffnet sind/ist und Spül-Druckgas in die Förderkammer (4) eingeleitet wird.

11. Pulverfördervorrichtung (100) nach Anspruch 10,
wobei die Druckregelung (91) ausgelegt ist, in dem Spül-Betriebsmodus der Pulverdichtstrompumpe (1) in der mindestens einen Förderkammer (4) einen vorab festgelegten oder festlegbaren Überdruck einzustellen; wobei die Gasmengenstrom-Erfassungseinrichtung (D1, D2, D3, D4) ausgelegt ist, in dem Spül-Betriebsmodus der Pulverdichtstrompumpe (1) die pro Zeiteinheit der Förderkammer (4) zuzuführende Menge an Druckgas zu erfassen, die erforderlich ist, um den vorab festgelegten oder festlegbaren Überdruck in der mindestens einen Förderkammer (4) einstellen und halten zu können; und
wobei Auswerteeinrichtung (92) ausgelegt ist, den in dem Spül-Betriebsmodus erfassten Gasmengenstrom mit einem vorgegebenen Soll-Wert zu vergleichen und bei Abweichung des erfassten Gasmengenstroms von dem Soll-Wert vorzugsweise in Abhängigkeit von der Größe der Abweichung automatisch eine Fehler- und/oder Alarmmeldung auszugeben.

12. Pulverfördervorrichtung (100) nach einem der Ansprüche 1 bis 11, wobei die Druckregelung (91) ausgelegt ist:
- zum Einstellen eines vorab festgelegten oder festlegbaren Druckwertes eines während einer Pulver-Ausstoßphase der Förderkammer (4) zuzuführenden Transport-Druckgases; und/oder
- zum Einstellen eines vorab festgelegten oder festlegbaren Druckwertes eines während einer Pulver-Ansaugphase in der Förderkammer (4) anzulegenden Unterdruckes; und/oder
- zum Einstellen eines vorab festgelegten oder festlegbaren Druckwertes eines im Spül-Betriebsmodus der Pulverdichtstrompumpe (1) der Förderkammer (4) zuzuführenden Spül-Druckgases; und/oder
- zum Einstellen eines vorab festgelegten oder festlegbaren Druckwertes eines zum Betätigen des Pulvereinlassventils (7) und/oder des Pulverauslassventils (8) an dem entsprechenden Ventil anzulegenden Betätigungsdruckes.

13. Pulverfördervorrichtung (100) nach einem der Ansprüche 1 bis 12,
wobei die Gasmengenstrom-Erfassungseinrichtung (D1, D2, D3, D4) ausgelegt ist, einen quantitativen oder qualitativen Wert der beim Einstellen und Halten des Soll-Druckes an der mindestens einen Förderkammer (4) pro Zeiteinheit zu- oder abgeführten Gasmenge und/oder einen quantitativen oder qualitativen Wert der beim Einstellen und Halten des Betätigungsdruckes an dem Pulvereinlassventil (7) bzw. dem Pulverauslassventil (8) pro Zeiteinheit dem Pulvereinlassventil (7) bzw. dem Pulverauslassventil (8) zugeführten Gasmenge zu erfassen; und/oder
wobei die Gasmengenstrom-Erfassungseinrichtung (D1, D2, D3, D4) eine Durchfluss-Sensoreinrichtung (S1, S2) aufweist zum Erfassen eines Volumen- oder Massendurchflusses in einer einen Ausgang der Druckregelung (91) mit der Förderkammer (4) strömungsmäßig verbindenden Druckgasleitung, und/oder zum Erfassen eines Volumen- oder Massendurchflusses in einer einen Ausgang der Druckregelung (91) mit dem Pulvereinlassventil (7) bzw. dem Pulverauslassventil (8) strömungsmäßig verbindenden Druckgasleitung.

14. Verfahren zum Betreiben einer Pulverfördervorrichtung (100), insbesondere einer Pulverfördervorrichtung (100) nach einem der Ansprüche 1 bis 13, wobei das Verfahren die folgenden Verfahrensschritte aufweist:
- Einstellen und Halten eines vorab festgelegten oder festlegbaren Unterdruckes in einer Förderkammer (4) einer Pulverdichtstrompumpe (1) während einer Pulver-Ansaugphase der Pulverdichtstrompumpe (1); und/oder
- Einstellen und Halten eines vorab festgelegten oder festlegbaren Überdruckes in einer Förderkammer (4) einer Pulverdichtstrompumpe (1) während einer Pulver-Ausstoßphase der Pulverdichtstrompumpe (1); und/oder
- Einstellen und Halten eines vorab festgelegten oder festlegbaren Überdruckes in einer Förderkammer (4) einer Pulverdichtstrompumpe (1) während eines Spül-Betriebsmodus der Pulverdichtstrompumpe (1); und/oder
- Einstellen und Halten eines vorab festgelegten oder festlegbaren Betätigungsdruckes in einem als pneumatisch betätigbares Quetschventil ausgeführten Pulvereinlassventil (7) der Pulverdichtstrompumpe (1) und/oder in einem als pneumatisch betätigbares Quetschventil ausgeführten Pulverauslassventil (8) der Pulverdichtstrompumpe (1);
- Erfassen einer von der Förderkammer (4) während der Pulver-Ansaugphase abzusaugenden Gasstrommenge, die erforderlich ist, um den vorab festgelegten oder festlegbaren Unterdruck in der Förderkammer (4) einstellen und halten zu können; und/oder
- Erfassen einer der Förderkammer (4) während der Pulver-Ausstoßphase zuzuführenden Gasstrommenge, die erforderlich ist, um den vorab festgelegten oder festlegbaren Überdruck in der Förderkammer (4) einstellen und halten zu können; und/oder
- Erfassen einer der Förderkammer (4) in dem Spül-Betriebsmodus der Pulverdichtstrompumpe (1) zuzuführenden Gasstrommenge, die erforderlich ist, um den vorab festgelegten oder festlegbaren Überdruck in der Förderkammer (4) einstellen und halten zu können; und/oder
- Erfassen einer dem Pulvereinlassventil (7) und/oder Pulverauslassventil (8) bei Betätigung des entsprechenden Ventils zuzuführenden Betätigungsgasstrommenge, die erforderlich ist, um den vorab festgelegten oder festlegbaren Betätigungsdruck in dem Pulvereinlassventil (7) und/oder Pulverauslassventil (8) einstellen und halten zu können;
- Vergleichen der mindestens einen erfassten Gasstrommenge mit einem entsprechenden Soll-Wert; und
- Ausgeben einer Fehler- und/oder Alarmmeldung, wenn die mindestens eine erfasste Gasstrommenge von dem entsprechenden Soll-Wert einschließlich eines ggf. vorhandenen Toleranzbereiches abweicht,
**dadurch gekennzeichnet, dass**
eine Sensoreinrichtung (S1, S2) vorgesehen ist zum Erfassen mindestens eines sich bei Betätigung des Pulvereinlassventils (7) am Pulvereinlassventil (7) einstellenden Druckwertes, und/oder zum Erfassen mindestens eines sich bei Betätigung des Pulverauslassventils (8) am Pulverauslassventil (8) einstellenden Druckwertes, und/oder zum Erfassen mindestens eines sich in einer Pulver-Ansaugphase der Pulverdichtstrompumpe (1) in der mindestens einen Förderkammer (4) einstellenden Unterdruckwertes, und/oder zum Erfassen mindestens eines sich in einer Pulver-Ausstoßphase oder in einem Spül-Betriebsmodus der Pulverdichtstrompumpe (1) in der mindestens einen Förderkammer (4) einstellenden Überdruckwertes.

## Claims

1. A powder conveying device (100), in particular for coating powder, wherein the powder conveying device (100) comprises the following:
- a pneumatically actuatable dense phase powder pump (1) comprising at least one conveyor chamber (4) having a powder inlet valve (7) and a powder outlet valve (8), wherein the powder inlet valve (7) and powder outlet valve (8) are respectively designed as pneumatically actuatable pinch valves and are able to close upon application of an actuating pressure;
- a pressure regulator (91) for setting and maintaining a predefined or definable set pressure on the at least one conveyor chamber (4) of the dense phase powder pump (1) and/or for setting and maintaining a predefined or definable actuating pressure on the powder inlet valve (7) or powder outlet valve (8) respectively;
- a gas flow volume detection device (D1, D2, D3, D4) for detecting or respectively determining the volume of gas fed to or discharged from the at least one conveyor chamber (4) per unit of time when setting and maintaining the set pressure and/or for detecting the volume of gas fed to the powder inlet valve (7) or powder outlet valve (8) respectively per unit of time when setting and maintaining the actuating pressure; and
- an evaluation device (92) designed to compare at least one detected or determined value of gas flow volume to a corresponding set value,
wherein the evaluation device (92) is further designed to automatically emit an error and/or warning signal upon the at least one detected value of gas flow volume deviating from the respective set value, preferably as a function of the magnitude of the deviation,
**characterized in that**
a sensor device (S1, S2) is provided to detect at least one set pressure value at the powder inlet valve (7) upon the actuation of said powder inlet valve (7) and/or to detect at least one set pressure value at the powder outlet valve (8) upon the actuation of said powder outlet valve (8) and/or to detect at least one set negative pressure value in the at least one conveyor chamber (4) during a powder suction phase of the dense phase powder pump (1) and/or to detect at least one set positive pressure value in the at least one conveyor chamber (4) during a powder discharge phase or flushing operating mode of the dense phase powder pump (1).

2. The powder conveying device (100) according to claim 1,
wherein the pressure regulator (91) comprises an inlet and at least one outlet, wherein the inlet of the pressure regulator (91) is fluidly connected or connectable to a compressed air source (58) which provides a predefined or definable constant supply pressure, and wherein the pressure regulator comprises at least one throttle device for the localized setting of a cross-sectional flow area such that the set pressure to be applied on the at least one conveyor chamber (4) and/or the actuating pressure to be applied on the powder inlet valve (7) or powder outlet valve (8) respectively is provided at the at least one outlet of the pressure regulator (91).

3. The powder conveying device (100) according to claim 1 or 2,
wherein the pressure regulator is designed to set the cross-sectional flow area of the at least one throttle device as a function of the at least one pressure value detected by the sensor device (S1, S2) such that the at least one pressure value detected by the sensor device (S1, S2) corresponds to the set pressure to be applied on the at least one conveyor chamber (4) or the actuating pressure to be applied on the powder inlet/outlet valve (7, 8) respectively.

4. The powder conveying device (100) according to claim 2 or 3,
wherein the gas flow volume detection device (D1, D2, D3, D4) is designed to detect the value of the volume of gas fed to or discharged from the at least one conveyor chamber (4) per unit of time when setting and maintaining the set pressure and/or the value of the volume of gas fed to the powder inlet valve (7) or respectively powder outlet valve (8) per unit of time when setting and maintaining the actuating pressure based on a cross-sectional flow area of the at least one throttle device set by the pressure regulator.

5. The powder conveying device (100) according to one of claims 1 to 4,
wherein the pressure regulator (9) is designed to provide a negative pressure during a powder suction phase of the dense phase powder pump (1) and/or to provide a positive pressure during a powder discharge phase of the dense phase powder pump (1) and/or to provide an actuating pressure for the actuation of the powder inlet valve (7) and/or to provide an actuating pressure for the actuation of the powder outlet valve (8); and/or
wherein the gas flow volume detection device (D1, D2, D3, D4) is designed to at least intermittently detect at least one of the following chronological sequences during the operation of the dense phase powder pump (1) and compare it against a correspondingly predefined chronological sequence:
- the chronological sequence of a volume of actuating compressed gas being fed to the powder inlet valve (7) per unit of time upon the actuating of the powder inlet valve (7);
- the chronological sequence of a volume of actuating compressed gas being fed to the powder outlet valve (8) per unit of time upon the actuating of the powder outlet valve (8);
- the chronological sequence of a volume of gas being discharged from the at least one conveyor chamber (4) per unit of time during powder suction phases of the dense phase powder pump (1); and
- the chronological sequence of a volume of compressed conveying gas being fed to the at least one conveyor chamber (4) per unit of time during powder discharge phases of the dense phase powder pump (1),
wherein the evaluation device (92) is in particular designed to automatically emit an error and/or warning signal upon at least one detected chronological period deviating from the respectively predefined chronological period as a function of the magnitude and/or temporal gradient to the difference between the predefined chronological period and the detected chronological period.

6. The powder conveying device (100) according to one of claims 1 to 5,
wherein the powder inlet valve (7) and/or the powder outlet valve (8) is/are designed as a pinch valve, and of the type in which a flexible tube separates a valve channel at the tube interior from a pressure chamber allocated to the pinch valve at the tube exterior, wherein the actuating pressure of the actuating compressed gas introduced into the pressure chamber can squeeze the tube and the valve channel can thereby be closed; and/or
wherein the evaluation device (92) is designed to automatically deduce a leak in the powder inlet valve (7) and/or powder outlet valve (8) or a malfunction of the powder inlet valve (7) and/or powder outlet valve (8) and emit a corresponding error and/or warning signal when the gas flow volume detection device (D1, D2, D3, D4) detects that the volume of actuating compressed gas fed to the powder inlet/outlet valve (7, 8) per unit of time as is required to apply the predefined or definable actuating pressure on the powder inlet/outlet valve (7, 8) is higher than a predefined or definable gas flow volume plus any applicable tolerance.

7. The powder conveying device (100) according to one of claims 1 to 6,
wherein the conveyor chamber (4) comprises a chamber wall formed by a filter (10) along at least a part of its length between a powder inlet (5) and a powder outlet (6) of the conveyor chamber (4), wherein the filter (10) surrounds the conveyor chamber (4) and separates the conveyor chamber (4) from an intermediate chamber (11) surrounding the filter (10) and formed between the filter (10) and a conveyor chamber housing (12), wherein the filter (10) is permeable to gas but not to coating powder.

8. The powder conveying device (100) according to claim 7,
wherein the sensor device (S1, S2) comprises at least one pressure sensor (S2) allocated to the conveyor chamber (4) for detecting a set pressure value of a positive pressure applied on the conveyor chamber (4) in the intermediate chamber (11) formed between the filter (10) and the conveyor chamber housing (12) during a powder discharge phase of the dense phase powder pump (1) or a flushing mode of the dense phase powder pump (1); and/or
wherein the sensor device (S1, S2) comprises at least one pressure sensor (S2) allocated to the conveyor chamber (4) for detecting a set pressure value of a negative pressure applied on the conveyor chamber (4) in the intermediate chamber (11) formed between the filter (10) and the conveyor chamber housing (12) during a powder suction phase of the dense phase powder pump (1).

9. The powder conveying device (100) according to one of claims 1 to 8,
wherein the evaluation device (92) is designed to automatically deduce clogging, aging or malfunctioning of a filter element or filter (10) allocated to the conveyor chamber (4) and emit a corresponding error and/or warning signal when the gas flow volume detection device (D1, D2, D3, D4) detects that the volume of compressed gas fed to the conveyor chamber (4) per unit of time in at least one powder discharge phase or in the flushing mode of the dense phase powder pump (1) as is required to set and maintain the predefined or definable set pressure in the conveyor chamber (4) deviates from a predefined or definable gas flow volume plus any applicable tolerance; and/or
wherein the evaluation device (92) is designed to automatically deduce the clogging of a filter element or filter (10) allocated to the conveyor chamber (4) and emit a corresponding error and/or warning signal when the gas flow volume detection device (D1, D2, D3, D4) detects that the volume of compressed gas discharged from the conveyor chamber (4) per unit of time during at least one powder suction phase of the dense phase powder pump (1) as is required to set and maintain a predefined or definable negative pressure in the conveyor chamber (4) deviates from a predefined or definable gas flow volume plus any applicable tolerance; and/or
wherein a powder suction phase and a powder discharge phase alternate consecutively during a powder-conveying operating mode of the dense phase powder pump (1), wherein a portion of powder is suctioned into the conveyor chamber (4) through the open powder inlet valve (7) while the powder outlet valve is closed (8) during the powder suction phase, and wherein the portion of powder previously suctioned into the conveyor chamber (4) is discharged through the open powder outlet valve (8) in the powder discharge phase by the introduction of conveying compressed gas into the conveyor chamber (4) while the powder inlet valve (7) is closed.

10. The powder conveying device (100) according to one of claims 1 to 9,
wherein the powder inlet valve (7) and/or powder outlet valve (8) is/are open and flushing compressed gas is introduced into the conveyor chamber (4) during a flushing operating mode of the dense phase powder pump (1).

11. The powder conveying device (100) according to claim 10,
wherein the pressure regulator (91) is designed to set a predefined or definable positive pressure in the at least one conveyor chamber (4) during the flushing operating mode of the dense phase powder pump (1); wherein the gas flow volume detection device (D1, D2, D3, D4) is designed to detect the volume of compressed gas to be fed per unit of time to the conveying chamber (4) in the flushing mode of the dense phase powder pump (1) as is required to be able to set and maintain the predefined or definable positive pressure in the at least one conveying chamber (4); and wherein the evaluation device (92) is designed to compare the gas flow volume detected during the flushing operating mode to a predefined set value and automatically emit an error and/or warning signal upon the detected value of the gas flow volume deviating from the set value, preferably as a function of the magnitude of the deviation.

12. The powder conveying device (100) according to one of claims 1 to 11,
wherein the pressure regulator (91) is designed to:
- set a predefined or predefinable pressure value of a conveying compressed gas to be fed to the conveyor chamber (4) during a powder discharge phase; and/or
- set a predefined or predefinable pressure value of a negative pressure to be applied on the conveyor chamber (4) during a powder suction phase; and/or
- set a predefined or predefinable pressure value of a flushing compressed gas to be fed to the conveyor chamber (4) during a flushing operating mode of the dense phase powder pump (1); and/or
- set a predefined or predefinable pressure value of an actuating pressure to be applied on the powder inlet valve (7) and/or powder outlet valve (8) to actuate the respective valve.

13. The powder conveying device (100) according to one of claims 1 to 12,
wherein the gas flow volume detection device (D1, D2, D3, D4) is designed to detect a quantitative or qualitative value of the volume of gas fed to or discharged from the at least one conveyor chamber (4) per unit of time during the setting and maintaining of the set pressure and/or a quantitative or qualitative value of the volume of gas fed to the powder inlet valve (7) or respectively powder outlet valve (8) per unit of time during the setting and maintaining of the actuating pressure on the powder inlet valve (7) or powder outlet valve (8) respectively; and/or wherein the gas flow volume detection device (D1, D2, D3, D4) comprises a flow sensor device (S1, S2) for detecting a volumetric or mass flow rate in a compressed gas line fluidly coupled to the conveyor chamber (4) in an outlet of the pressure regulator (91) and/or for detecting a volumetric or mass flow rate in a compressed gas line fluidly coupled to the powder inlet valve (7) or respectively powder outlet valve (8) in an outlet of the pressure regulator (91).

14. A method for operating a powder conveying device (100), particularly a powder conveying device (100) according to one of claims 1 to 13, wherein the method comprises the following method steps:
- setting and maintaining a predefined or definable negative pressure in a conveyor chamber (4) of a dense phase powder pump (1) during a powder suction phase of the dense phase powder pump (1); and/or
- setting and maintaining a predefined or definable positive pressure in a conveyor chamber (4) of a dense phase powder pump (1) during a powder discharge phase of the dense phase powder pump (1); and/or
- setting and maintaining a predefined or definable positive pressure in a conveyor chamber (4) of a dense phase powder pump (1) during a flushing operating mode of the dense phase powder pump (1); and/or
- setting and maintaining a predefined or definable actuating pressure in a powder inlet valve (7) of the dense phase powder pump (1) designed as a pneumatically actuatable pinch valve and/or in a powder outlet valve (8) of the dense phase powder pump (1) designed as a pneumatically actuatable pinch valve;
- detecting a gas flow volume to be suctioned out of the conveyor chamber (4) during the powder suction phase as is required to enable the setting and maintaining of the predefined or definable negative pressure in the conveyor chamber (4); and/or
- detecting a gas flow volume to be fed to the conveyor chamber (4) during the powder discharge phase as is required to enable the setting and maintaining of the predefined or definable positive pressure in the conveyor chamber (4); and/or
- detecting a gas flow volume to be fed to the conveyor chamber (4) in the flushing operating mode of the dense phase powder pump (1) as is required to enable the setting and maintaining of the predefined or definable excess pressure in the conveyor chamber (4); and/or
- detecting a volume of actuating gas to be fed to the powder inlet valve (7) and/or powder outlet valve (8) upon actuation of the respective valve as is required to enable the setting and maintaining of the predefined or definable actuating pressure in the powder inlet valve (7) and/or powder outlet valve (8);
- comparing the at least one detected gas flow volume to a respective set value; and
- emitting an error and/or warning signal when the at least one detected gas flow volume deviates from the respective set value including any applicable range of tolerance,
**characterized in that**
a sensor device (S1, S2) is provided to detect at least one set pressure value at the powder inlet valve (7) upon the actuation of said powder inlet valve (7) and/or to detect at least one set pressure value at the powder outlet valve (8) upon the actuation of said powder outlet valve (8) and/or to detect at least one set negative pressure value in the at least one conveyor chamber (4) during a powder suction phase of the dense phase powder pump (1) and/or to detect at least one set positive pressure value in the at least one conveyor chamber (4) during a powder discharge phase or flushing operating mode of the dense phase powder pump (1).

## Revendications

1. Dispositif de convoyage de poudre (100), en particulier pour une poudre de revêtement, le dispositif de convoyage de poudre (100) présentant les éléments suivants :
- une pompe à poudre en phase dense (1) actionnée par voie pneumatique, qui comprend au moins une chambre de convoyage (4) pourvue d'une vanne d'entrée de poudre (7) et d'une vanne de sortie de poudre (8), la vanne d'entrée de poudre (7) et la vanne de sortie de poudre (8) étant réalisées chacune sous la forme d'une vanne à écrasement actionnable par voie pneumatique et refermable par application d'une pression d'actionnement ;
- une régulation de pression (91) pour régler et maintenir une pression de consigne fixée ou susceptible d'être fixée préalablement au niveau de ladite au moins une chambre de convoyage (4) de la pompe à poudre en phase dense (1) et/ou pour régler et maintenir une pression d'actionnement fixée ou susceptible d'être fixée préalablement au niveau de la vanne d'entrée de poudre (7) ou de la vanne de sortie de poudre (8) ;
- un moyen de détection de débit de gaz (D1, D2, D3, D4) pour détecter ou déterminer une quantité de gaz amenée ou évacuée par unité de temps lors du réglage et du maintien de la pression de consigne au niveau de ladite au moins une chambre de convoyage (4) et/ou pour détecter une quantité de gaz amenée par unité de temps lors du réglage et du maintien de la pression d'actionnement au niveau de la vanne d'entrée de poudre (7) ou de la vanne de sortie de poudre (8) ; et
- un moyen d'évaluation (92) qui est conçu pour comparer au moins une valeur de quantité de gaz détectée ou déterminée avec une valeur de consigne correspondante,
dans lequel
le moyen d'évaluation (92) est en outre conçu pour émettre automatiquement un message d'erreur et/ou d'alarme lors d'un écart de ladite au moins une valeur de quantité de gaz détectée par rapport à la valeur de consigne correspondante, de préférence en fonction de la taille de l'écart,
**caractérisé en ce que**
il est prévu un moyen capteur (S1, S2) pour détecter au moins une valeur de pression qui s'établit au niveau de la vanne d'entrée de poudre (7) lors de l'actionnement de la vanne d'entrée de poudre (7), et/ou pour détecter au moins une valeur de pression qui s'établit au niveau de la vanne de sortie de poudre (8) lors de l'actionnement de la vanne de sortie de poudre (8), et/ou pour détecter au moins une valeur de dépression qui s'établit dans une phase d'aspiration de poudre de la pompe à poudre en phase dense (1) dans ladite au moins une chambre de convoyage (4), et/ou pour détecter au moins une valeur de surpression qui s'établit dans une phase de refoulement de poudre ou dans un mode de fonctionnement par rinçage de la pompe à poudre en phase dense (1) dans ladite au moins une chambre de convoyage (4).

2. Dispositif de convoyage de poudre (100) selon la revendication 1,
dans lequel la régulation de pression (91) présente une entrée et au moins une sortie, l'entrée de la régulation de pression (91) étant reliée ou susceptible d'être reliée en terme d'écoulement à une alimentation en air comprimé (58) qui fournit une pression d'alimentation constante fixée ou susceptible d'être fixée préalablement, et la régulation de pression présente au moins un moyen d'étranglement pour régler localement une section transversale de passage, de telle sorte que la pression de consigne à appliquer à ladite au moins une chambre de convoyage (4) et/ou la pression d'actionnement à appliquer à la vanne d'entrée de poudre (7) ou à la vanne de sortie de poudre (8) est assurée à ladite au moins une sortie de la régulation de pression (91).

3. Dispositif de convoyage de poudre (100) selon la revendication 1 ou 2, dans lequel la régulation de pression est conçue pour régler la section transversale de passage dudit au moins un moyen d'étranglement en fonction de ladite au moins une valeur de pression détectée par le moyen capteur (S1, S2) de telle sorte que ladite au moins une valeur de pression détectée par le moyen capteur (S1, S2) corresponde à la pression de consigne à appliquer à ladite au moins une chambre de convoyage (4) et/ou à la pression d'actionnement à appliquer à la vanne d'entrée / de sortie de poudre (7, 8).

4. Dispositif de convoyage de poudre (100) selon la revendication 2 ou 3, dans lequel le moyen de détection de débit de gaz (D1, D2, D3, D4) est conçu pour détecter la valeur de la quantité de gaz amenée ou évacuée par unité de temps lors du réglage et du maintien de la pression de consigne au niveau de ladite au moins une chambre de convoyage (4) et/ou pour détecter la valeur de la quantité de gaz amenée par unité de temps lors du réglage et du maintien de la pression d'actionnement au niveau de la vanne d'entrée de poudre (7) ou de la vanne de sortie de poudre (8), en se basant sur une section transversale de passage dudit au moins un moyen d'étranglement réglée par la régulation de pression.

5. Dispositif de convoyage de poudre (100) selon l'une des revendications 1 à 4,
dans lequel
la régulation de pression (91) est conçue pour assurer une dépression pendant une phase d'aspiration de poudre de la pompe à poudre en phase dense (1) et/ou pour assurer une surpression pendant une phase de refoulement de poudre de la pompe à poudre en phase dense (1) et/ou pour assurer une pression d'actionnement pour actionner la vanne d'entrée de poudre (7) et/ou pour assurer une pression d'actionnement pour actionner la vanne de sortie de poudre (8) ; et/ou
le moyen de détection de débit de gaz (D1, D2, D3, D4) est conçu pour détecter, pendant le fonctionnement de la pompe à poudre en phase dense (1), au moins temporairement au moins l'une des évolutions temporelles suivantes et pour la comparer à une évolution temporelle donnée en correspondance :
- l'évolution temporelle d'une quantité de gaz sous pression d'actionnement amenée par unité de temps à la vanne d'entrée de poudre (7), lors d'un actionnement de la vanne d'entrée de poudre (7) ;
- l'évolution temporelle d'une quantité de gaz sous pression d'actionnement amenée par unité de temps à la vanne de sortie de poudre (8), lors d'un actionnement de la vanne de sortie de poudre (8) ;
- l'évolution temporelle d'une quantité de gaz évacuée par unité de temps depuis ladite au moins une chambre de convoyage (4) pendant des phases d'aspiration de poudre de la pompe à poudre en phase dense (1) ; et
- l'évolution temporelle d'une quantité de gaz comprimé de transport amenée par unité de temps à ladite au moins une chambre de convoyage (4) pendant des phases de refoulement de poudre de la pompe à poudre en phase dense (1),
dans lequel le moyen d'évaluation (92) est en particulier conçu pour émettre automatiquement un message d'erreur et/ou d'alarme lors d'un écart de ladite au moins une évolution temporelle détectée par rapport à l'évolution temporelle donnée en correspondance, de préférence en fonction de la taille et/ou du gradient temporel d'une différence entre l'évolution temporelle donnée et l'évolution temporelle détectée.

6. Dispositif de convoyage de poudre (100) selon l'une des revendications 1 à 5,
dans lequel la vanne d'entrée de poudre (7) et/ou la vanne de sortie de poudre (8) est/sont réalisée(s) sous la forme d'une vanne à écrasement du type dans lequel un tuyau flexible sépare un canal de vanne sur le côté intérieur du tuyau vis-à-vis d'une chambre de pression associée à la vanne à écrasement sur le côté extérieur du tuyau, le tuyau pouvant être pincé par la pression d'actionnement du gaz comprimé d'actionnement introduit dans la chambre de pression et ainsi le canal de vanne peut être refermé ; et/ou
le moyen d'évaluation (92) est conçu pour conclure automatiquement à un défaut d'étanchéité dans la vanne d'entrée de poudre (7) ou dans la vanne de sortie de poudre (8) ou à un dysfonctionnement de la vanne d'entrée de poudre (7) ou de la vanne de sortie de poudre (8) et pour émettre un message d'erreur et/ou d'alarme correspondant lorsque le moyen de détection de débit de gaz (D1, D2, D3, D4) détecte que la quantité de gaz comprimé d'actionnement amenée par unité de temps à la vanne d'entrée ou de sortie de poudre (7, 8), quantité qui est nécessaire pour appliquer la pression d'actionnement fixée ou susceptible d'être fixée préalablement à la vanne d'entrée ou de sortie de poudre (7, 8), est supérieure à un flux de débit de gaz fixé ou susceptible d'être fixé préalablement, en sus d'une tolérance prévue le cas échéant.

7. Dispositif de convoyage de poudre (100) selon l'une des revendications 1 à 6,
dans lequel la chambre de convoyage (4) comprend une paroi de chambre qui est formée par un filtre (10) au moins sur une partie de sa longueur entre une entrée de poudre (5) et une sortie de poudre (6) de la chambre de convoyage (4), ledit filtre (10) entourant la chambre de convoyage (4) et séparant la chambre de convoyage (4) d'une chambre intermédiaire (11) qui entoure le filtre (10), et qui est formée entre le filtre (10) et un boîtier de chambre de convoyage (12), le filtre (10) étant perméable aux gaz mais non pas à la poudre de revêtement.

8. Dispositif de convoyage de poudre (100) selon la revendication 7,
dans lequel le moyen capteur (S1, S2) comprend au moins un capteur de pression (S2) associé à la chambre de convoyage (4) pour détecter une valeur de pression d'une surpression qui est appliquée à la chambre de convoyage (4) et qui s'établit dans une phase de refoulement de poudre de la pompe à poudre en phase dense (1) ou dans un mode de fonctionnement par rinçage de la pompe à poudre en phase dense (1) dans la chambre intermédiaire (11) formée entre le filtre (10) et le boîtier de chambre de convoyage (12) ; et/ou
le moyen capteur (S1, S2) comprend au moins un capteur de pression (S2) associé à la chambre de convoyage (4) pour détecter une valeur de pression d'une dépression qui est appliquée à la chambre de convoyage (4) et qui s'établit dans une phase d'aspiration de poudre de la pompe à poudre en phase dense (1) dans la chambre intermédiaire (11) formée entre le filtre (10) et le boîtier de chambre de convoyage (12).

9. Dispositif de convoyage de poudre (100) selon l'une des revendications 1 à 8,
dans lequel le moyen d'évaluation (92) est conçu pour conclure automatiquement à un colmatage, un vieillissement ou à un dysfonctionnement d'un élément filtrant ou d'un filtre (10) associé à la chambre de convoyage (4) et pour émettre un message d'erreur et/ou d'alarme correspondant lorsque, pendant au moins une phase de refoulement de poudre ou dans le mode de fonctionnement par rinçage de la pompe à poudre en phase dense (1), le moyen de détection de débit de gaz (D1, D2, D3, D4) détecte que la quantité de gaz comprimé amenée par unité de temps à la chambre de convoyage (4), quantité qui est nécessaire pour régler et maintenir la pression de consigne fixée ou susceptible d'être fixée préalablement dans la chambre de convoyage (4), s'écarte d'un flux de débit de gaz fixé ou susceptible d'être fixé préalablement, en sus d'une tolérance prévue le cas échéant ;
et/ou
le moyen d'évaluation (92) est conçu pour conclure automatiquement à un colmatage d'un élément filtrant ou d'un filtre (10) associé à la chambre de convoyage (4) et pour émettre un message d'erreur et/ou d'alarme correspondant lorsque, pendant au moins une phase d'aspiration de poudre de la pompe à poudre en phase dense (1), le moyen de détection de débit de gaz (D1, D2, D3, D4) détecte que la quantité de gaz comprimé évacuée par unité de temps depuis la chambre de convoyage (4), quantité qui est nécessaire pour régler et maintenir une dépression fixée ou susceptible d'être fixée préalablement dans la chambre de convoyage (4), s'écarte d'un flux de débit de gaz fixé ou susceptible d'être fixé préalablement, en sus d'une tolérance prévue le cas échéant ;
et/ou
pendant un mode de fonctionnement de convoyage de poudre de la pompe à poudre en phase dense (1), une phase d'aspiration de poudre et une phase de refoulement de poudre sont exécutées en continu en alternance, et pendant la phase d'aspiration de poudre une portion de poudre est aspirée dans la chambre de convoyage (4) à travers la vanne d'entrée de poudre (7) ouverte, tandis que la vanne de sortie de poudre (8) est fermée, et pendant la phase de refoulement de poudre la portion de poudre aspirée auparavant dans la chambre de convoyage (4) est refoulée à travers la vanne de sortie de poudre (8) ouverte par introduction d'un gaz comprimé de transport dans la chambre de convoyage (4) depuis la vanne de sortie de poudre (8) ouverte, tandis que la vanne d'entrée de poudre (7) est fermée.

10. Dispositif de convoyage de poudre (100) selon l'une des revendications 1 à 9,
dans lequel dans un mode de fonctionnement par rinçage de la pompe à poudre en phase dense (1), la vanne d'entrée de poudre (7) et/ou la vanne de sortie de poudre (8) est ouverte et le gaz comprimé de rinçage est introduit dans la chambre de convoyage (4).

11. Dispositif de convoyage de poudre (100) selon la revendication 10, dans lequel
la régulation de pression (91) est conçue pour régler une surpression fixée ou susceptible d'être fixée préalablement dans ladite au moins une chambre de convoyage (4), dans le mode de fonctionnement par rinçage de la pompe à poudre en phase dense (1) ;
le moyen de détection de débit de gaz (D1, D2, D3, D4) est conçu pour détecter la quantité de gaz comprimé à amener par unité de temps à la chambre de convoyage (4), dans le mode de fonctionnement par rinçage de la pompe à poudre en phase dense (1), quantité qui est nécessaire pour pouvoir régler et maintenir une surpression fixée ou susceptible d'être fixée préalablement dans ladite au moins une chambre de convoyage (4) ; et
le moyen d'évaluation (92) est conçu pour comparer le flux de débit de gaz détecté dans le mode de fonctionnement par rinçage avec une valeur de consigne donnée et pour émettre automatiquement un message d'erreur et/ou d'alarme lors d'un écart du flux de débit de gaz détecté par rapport à la valeur de consigne, de préférence en fonction de la taille de l'écart.

12. Dispositif de convoyage de poudre (100) selon l'une des revendications 1 à 11,
dans lequel
la régulation de pression (91) est conçue pour :
- régler une valeur de pression fixée ou susceptible d'être fixée préalablement d'un gaz comprimé de transport à amener à la chambre de convoyage (4) pendant une phase de refoulement de poudre ; et/ou
- régler une valeur de pression fixée ou susceptible d'être fixée préalablement d'une dépression à appliquer à la chambre de convoyage (4) pendant une phase d'aspiration de poudre ; et/ou
- régler une valeur de pression fixée ou susceptible d'être fixée préalablement d'un gaz comprimé de rinçage à amener à la chambre de convoyage (4) pendant un mode de fonctionnement par rinçage de la pompe à poudre en phase dense (1) ; et/ou
- régler une valeur de pression fixée ou susceptible d'être fixée préalablement d'une pression d'actionnement à appliquer à la vanne correspondante pour actionner la vanne d'entrée de poudre (7) et/ou la vanne de sortie de poudre (8).

13. Dispositif de convoyage de poudre (100) selon l'une des revendications 1 à 12,
dans lequel
le moyen de détection de débit de gaz (D1, D2, D3, D4) est conçu pour détecter une valeur quantitative ou qualitative de la quantité de gaz amenée ou évacuée par unité de temps à ou depuis la chambre de convoyage (4) lors du réglage et du maintien de la pression de consigne, et/ou une valeur quantitative ou qualitative de la quantité de gaz amenée par unité de temps à la vanne d'entrée de poudre (7) ou à la vanne de sortie de poudre (8) lors du réglage et du maintien de la pression d'actionnement au niveau de la vanne d'entrée de poudre (7) ou de la vanne de sortie de poudre (8) ; et/ou
le moyen de détection de débit de gaz (D1, D2, D3, D4) comprend un moyen capteur (S1, S2) pour détecter un débit volumique ou massique dans un conduit de gaz comprimé qui relie en termes d'écoulement une sortie de la régulation de pression (91) à la chambre de convoyage (4), et/ou pour détecter un débit volumique ou massique dans un conduit de gaz comprimé qui relie en termes d'écoulement une sortie de la régulation de pression (91) à la vanne d'entrée de poudre (7) ou à la vanne de sortie de poudre (8).

14. Procédé pour faire fonctionner un dispositif de convoyage de poudre (100), en particulier un dispositif de convoyage de poudre (100) selon l'une des revendications 1 à 13, le procédé comprenant les étapes suivantes consistant à :
- régler et maintenir une dépression fixée ou susceptible d'être fixée préalablement dans une chambre de convoyage (4) d'une pompe à poudre en phase dense (1) pendant une phase d'aspiration de poudre de la pompe à poudre en phase dense (1) ; et/ou
- régler et maintenir une surpression fixée ou susceptible d'être fixée préalablement dans une chambre de convoyage (4) d'une pompe à poudre en phase dense (1) pendant une phase de refoulement de poudre de la pompe à poudre en phase dense (1) ; et/ou
- régler et maintenir une surpression fixée ou susceptible d'être fixée préalablement dans une chambre de convoyage (4) d'une pompe à poudre en phase dense (1) pendant un mode de fonctionnement par rinçage de la pompe à poudre en phase dense (1) ; et/ou
- régler et maintenir une pression d'actionnement fixée ou susceptible d'être fixée préalablement dans une vanne d'entrée de poudre (7), réalisée sous forme de vanne à écrasement actionnable par voie pneumatique, de la pompe à poudre en phase dense (1) et/ou dans une vanne de sortie de poudre (8), réalisée sous forme de vanne à écrasement actionnable par voie pneumatique, de la pompe à poudre en phase dense (1) ;
- détecter une quantité de gaz à aspirer depuis la chambre de convoyage (4) pendant la phase d'aspiration de poudre, quantité qui est nécessaire pour pourvoir régler et maintenir la dépression fixée ou susceptible d'être fixée préalablement dans la chambre de convoyage (4) ; et/ou
- détecter une quantité de gaz à amener à la chambre de convoyage (4) pendant une phase de refoulement de poudre, quantité qui est nécessaire pour pourvoir régler et maintenir la surpression fixée ou susceptible d'être fixée préalablement dans la chambre de convoyage (4) ; et/ou
- détecter une quantité de gaz à amener à la chambre de convoyage (4) dans le mode de fonctionnement par rinçage de la pompe à poudre en phase dense (1), quantité qui est nécessaire pour pourvoir régler et maintenir la surpression fixée ou susceptible d'être fixée préalablement dans la chambre de convoyage (4) ; et/ou
- détecter une quantité de gaz d'actionnement à amener à la vanne d'entrée de poudre (7) et/ou à la vanne de sortie de poudre (8) lors de l'actionnement de la vanne correspondante, quantité qui est nécessaire pour pourvoir régler et maintenir la pression d'actionnement fixée ou susceptible d'être fixée préalablement dans la vanne d'entrée de poudre (7) et/ou dans la vanne de sortie de poudre (8) ;
- comparer ladite au moins une quantité de gaz détectée avec une valeur de consigne correspondante ; et
- émettre un message d'erreur et/ou d'alarme lorsque ladite au moins une quantité de gaz détectée s'écarte de la valeur de consigne correspondante, y comprise une plage de tolérances existante le cas échéant ;
**caractérisé en ce que**
le moyen capteur (S1, S2) est prévu pour détecter au moins une valeur de pression qui s'établit au niveau de la vanne d'entrée de poudre (7) lors de l'actionnement de la vanne d'entrée de poudre (7), et/ou pour détecter au moins une valeur de pression qui s'établit au niveau de la vanne de sortie de poudre (8) lors de l'actionnement de la vanne de sortie de poudre (8), et/ou pour détecter au moins une valeur de dépression qui s'établit dans une phase d'aspiration de poudre de la pompe à poudre en phase dense (1) dans ladite au moins une chambre de convoyage (4), et/ou pour détecter au moins une valeur de surpression qui s'établit dans une phase de refoulement de poudre ou dans un mode de fonctionnement par rinçage de la pompe à poudre en phase dense (1) dans ladite au moins une chambre de convoyage (4).
